(19) **Europäisches Patentamt European Patent Office Office européen des brevets**

(11) **EP 4 002 801 B1**

(12) **FASCICULE DE BREVET EUROPEEN**

(45) Date de publication et mention de la délivrance du brevet:
**14.08.2024 Bulletin 2024/33**

(21) Numéro de dépôt: **21210098.6**

(22) Date de dépôt: **24.11.2021**

(51) Classification Internationale des Brevets (IPC):
***H04L 41/0813*** *(2022.01)*

(52) Classification Coopérative des Brevets (CPC):
**H04L 43/00; G06F 16/27; H04L 41/0813**

(54) **PROCÉDÉ DE COMMUNICATION DE L'ÉTAT D'UN RÉSEAU DE CALCULATEUR(S), PROGRAMME D'ORDINATEUR, NOEUD DE CALCUL ET RÉSEAU ASSOCIÉS**

VERFAHREN ZUR KOMMUNIKATION DES STATUS EINES RECHNERNETZWERKS, ENTSPRECHENDES COMPUTERPROGRAMM, NETZWERK UND ENTSPRECHENDER RECHENKNOTEN

METHOD FOR COMMUNICATION OF THE STATE OF A COMPUTER NETWORK, ASSOCIATED COMPUTER PROGRAM, CALCULATION NODE AND NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2020 FR 2012062**

(43) Date de publication de la demande:
**25.05.2022 Bulletin 2022/21**

(73) Titulaire: **THALES**
**92400 Courbevoie (FR)**

(72) Inventeurs:
 • **RENARD, Benoit**
 **33700 Mérignac (FR)**
 • **TAILLIEZ, Franck**
 **78851 Élancourt (FR)**
 • **GUEGUEN, Michel**
 **78851 Élancourt (FR)**
 • **MARANDOLA, Guy**
 **78851 Élancourt (FR)**

(74) Mandataire: **Lavoix**
 **2, place d'Estienne d'Orves**
 **75441 Paris Cedex 09 (FR)**

(56) Documents cités:
 **US-A1- 2013 205 128    US-A1- 2014 328 216**
 **US-B1- 9 760 529**

 • **SHAIK MOHAMMED SALMAN ET AL: "Enabling Fog-based Industrial Robotics Systems", 2020 25TH IEEE INTERNATIONAL CONFERENCE ON EMERGING TECHNOLOGIES AND FACTORY AUTOMATION (ETFA), IEEE, vol. 1, 8 September 2020 (2020-09-08), pages 61 - 68, XP033835605, DOI: 10.1109/ETFA46521.2020.9211887**

**EP 4 002 801 B1**

**Description**

La présente invention concerne un procédé de communication de l'état d'un réseau de calculateur(s) comprenant une pluralité de noeuds de calcul interconnectés au sein dudit réseau, le procédé étant propre à être mis en oeuvre, cycliquement, par chaque noeud de calcul.

La présente invention concerne aussi un programme d'ordinateur comportant des instructions logicielles qui, lorsqu'elles sont exécutées par un ordinateur, mettent en oeuvre un tel procédé de communication de l'état d'un réseau de calculateur(s) comprenant une pluralité de noeuds de calcul.

La présente invention concerne également un noeud de calcul d'un réseau de calculateur(s) comprenant une pluralité de noeuds de calcul interconnectés au sein dudit réseau.

La présente invention concerne également un réseau de calculateur(s) comprenant une pluralité de noeuds de calcul interconnectés au sein dudit réseau.

La présente invention concerne de manière générale le domaine des systèmes « temps réel » embarqués tels que des système critiques dont on cherche par définition à garantir le bon fonctionnement afin d'éviter toute panne dont les dommages associés seraient dramatiques.

Un système critique met généralement en oeuvre une ou plusieurs fonctions (i.e. applications fonctionnelles/opérationnelles) réparties et embarquées dans des calculateurs composés d'un ou plusieurs noeuds de calcul interconnectés par au moins un réseau. Par la suite, par noeud de calcul on entend une instance de système d'exploitation (de l'anglais *Operating System*) virtuelle ou non.

Pour garantir le bon fonctionnement d'un système critique, il est nécessaire de connaitre en quasi permanence l'état de chaque noeud de calcul afin de garantir une continuité de fonctionnement lors d'une panne d'un ou de plusieurs noeuds et/ou d'une rupture d'une ou de plusieurs liaisons de communication entre noeud(s) de calcul, ou bien encore pour permettre la prise en compte d'un besoin fonctionnel de reconfiguration correspondant à l'absence d'un ou plusieurs noeuds.

Etablir un tel état de manière simple et fiable est associé à de nombreuses difficultés car il faut savoir détecter des disfonctionnements parfois silencieux et cachés dans la topologie du réseau (chemins du réseau non utilisés régulièrement par l'opérationnel), selon les topologies réseaux, tenir compte de latences non homogènes sur le réseau (chemin plus ou moins long entre les noeuds de calcul), tenir compte de phénomènes d'asynchronismes, car tous les modules démarrent de manière asynchrone (heure locale différente) et leurs heures peuvent dériver induisant à long terme des pertes de cycles, et ce en évitant d'induire de fausses alarmes tout en assurant une surveillance réelle avec une latence définie.

Autrement dit pour de tels systèmes critiques, il est essentiel de surveiller l'état de communication des fonctions (i.e. applications fonctionnelles/opérationnelles) installées sur les noeuds de calculs, et ce indépendamment de leur propre installation et indépendamment de la topologie et/ou de la technologie de réseau mise en oeuvre.

Une première solution existante de surveillance est basée sur l'intégration au sein même de chaque fonction (i.e. application fonctionnelle/opérationnelle) d'une surveillance intégrée, basée sur la surveillance de perte de message(s). Pour ce faire, chaque fonction du réseau doit comprendre et connaître le déploiement exact de chaque autre fonction sur les noeuds de calcul et le réseau utilisé, et la gestion de l'absence de réponse ou de perte de noeud de calcul doit être fonctionnellement intégrée au fonctionnement de la fonction considérée, ce qui a pour effet de surcomplexifier chaque fonction et les rendre sensiblement adhérentes à un déploiement et aux topologies réseaux, si bien que parvenir à (ré-)établir une cohérence de fonctionnement entre toutes les fonctions opérationnelles peut s'avérer impossible.

Par la suite par « opérationnel(le) » on entend la capacité d'un élément à réaliser parfaitement une opération, un traitement, pour lesquels l'élément est configuré.

Une deuxième solution existante est basée sur la mise en oeuvre de tests locaux propre à remonter un état du réseau à chaque fonction. De tels tests correspondent par exemple à des tests de bouclage en frontière de calculateur. Cependant, ces tests locaux testent uniquement une partie locale du réseau à proximité et ne permettent pas de tester l'état les liaisons opérationnelles d'interconnexion de noeud de calcul.

Une troisième solution existante consiste à combiner les deux solutions précédentes pour réduire la complexité globale de la première solution. Toutefois, cette dernière solution ne permet pour autant pas de garantir, temporellement, et de manière fiable le partage et la connaissance de l'état exhaustif du réseau par l'ensemble des fonctions opérationnelles mises en oeuvre. En effet, avec cette dernière solution, il reste possible qu'au moins une fonction ait un état erroné incohérent avec le contexte fonctionnel courant, et dans ce cas certains échanges de partages de contexte émis par des fonctions déjà au courant de la modification de configuration fonctionnelle peuvent être perdus par ladite au moins une fonction qui de fait ne les attend pas, car pas au courant d'un tel changement de configuration fonctionnel.

Associé à ces solutions un mécanisme de gestion de l'heure commune au noeud de calcul est traditionnellement basé sur une diffusion de l'heure assurée par un noeud de calcul maître, avec gestion de redondance pour les cas de panne, connue plus ou moins explicitement par les noeuds de calcul esclave. Cependant, un tel mécanisme de gestion de l'heure ne permet pas d'éviter des saut d'heure système notamment en cas de panne.

Le système du document US 9 760 529 B1 comprend un noeud pour détecter une condition de déclenchement pour une initiation d'un protocole d'initialisation de gestionnaire d'état distribué (DSM). Le noeud détermine une liste d'éléments proposés comprenant un nombre sélectionné de noeuds parmi une pluralité de noeuds. Le noeud génère un message d'amorçage indiquant une liste d'éléments joints indiquant que le noeud a accepté l'adhésion à une configuration DSM proposée et un identifiant de dernière transition validée (LCTI) indiquant une transition d'état. Le noeud transmet une indication au noeud sélectionné pour commencer le traitement de la demande de transition d'état soumise par le client.

Le document SHAIK MOHAMMED SALMAN ET AL: "Enabling Fog-based Industrial Robotics Systems", 2020 25TH IEEE INTERNATIONAL CONFERENCE ON EMERGING TECHNOLOGIES AND FACTORY AUTOMATION (ETFA), IEEE, vol. 1, 8 septembre 2020 (2020-09-08), pages 61-68, XP033835605, DOI: 10.1109/ETFA46521.2020.9211887, divulge un système impliquant des robots et des cellules robotisées au niveau de l'usine, puis mettant en évidence les principaux éléments de base nécessaires pour atteindre une fonctionnalité de faible latence et de disponibilité des ressources à la demande dans un système basé sur le brouillard.

Le but de l'invention est donc de proposer une surveillance globale du réseau opérationnel fiable afin d'en connaître la « santé » à tout instant.

A cet effet, l'invention a pour objet un procédé de communication de l'état d'un réseau de calculateur(s) comprenant une pluralité de noeuds de calcul interconnectés au sein dudit réseau, le procédé étant propre à être mis en oeuvre, cycliquement, par chaque noeud de calcul, le procédé comprenant au moins :

- une étape d'émission, par un noeud de calcul courant opérationnel de ladite pluralité de noeuds de calcul, à chaque cycle courant après une phase de démarrage/redémarrage dudit noeud de calcul courant, vers tous les autres noeuds de calcul de ladite pluralité de noeuds de calcul, d'un message d'évaluation locale de l'état dudit réseau, ledit message comprenant au moins :

    - une vision locale de l'état de fonctionnement dudit réseau vue par ledit noeud de calcul courant, ladite vision locale correspondant à la liste des autres noeuds de calcul de ladite pluralité de noeuds de calcul, dont le noeud de calcul courant a reçu un message d'évaluation associé à un cycle précédent le cycle courant,
    - une synthèse locale de l'état de fonctionnement dudit réseau vue par ledit noeud de calcul courant, ladite synthèse locale correspondant à l'intersection de la vision locale dudit noeud de calcul courant et des visions locales émises, au cours d'un cycle précédent, à destination dudit noeud de calcul courant, par les autres noeuds de calcul de ladite pluralité de noeuds de calcul,
    - une dernière synthèse globale de l'état de fonctionnement dudit réseau publiée localement par ledit noeud de calcul courant, ladite synthèse globale correspondant à une synthèse locale commune à tous les noeuds de calcul opérationnels de ladite pluralité de noeuds de calcul,

- une étape de réception, par ledit noeud de calcul courant, à chaque cycle courant, d'un message d'évaluation locale de l'état dudit réseau émis par chaque autre noeud de calcul de ladite pluralité de noeuds de calcul, chaque message d'évaluation reçu en provenance d'un autre noeud de calcul distinct dudit noeud de calcul courant comprenant réciproquement au moins :

    - une vision locale de l'état de fonctionnement dudit réseau vue par ledit autre noeud de calcul distinct dudit noeud de calcul courant,
    - une synthèse locale de l'état de fonctionnement dudit réseau vue par ledit autre noeud de calcul distinct dudit noeud de calcul courant,
    - une dernière synthèse globale de l'état de fonctionnement dudit réseau publiée localement par ledit autre noeud de calcul distinct dudit noeud de calcul courant;

- une étape de traitement et d'analyse des dernières données reçues, ladite étape de traitement, étant mise en oeuvre un cycle sur deux, et générant à chaque mise en oeuvre un message d'évaluation locale de l'état dudit réseau vu par ledit noeud de calcul courant, associé auxdites dernières données reçues,

le message émis à chaque cycle d'émission correspondant au dernier message généré au cours de ladite étape de traitement.

Ainsi, la présente invention propose d'apporter une surveillance globale du réseau opérationnel à tout instant en introduisant sur chaque noeud de calcul une surveillance périodique de l'état du réseau. A chaque cycle, chaque noeud de calcul, selon la présente invention est propre à exploiter d'une part l'absence de message reçu en provenance d'un autre noeud comme une information représentative d'un dysfonctionnement de cet autre noeud ou représentative d'une impossibilité de cet autre noeud à acheminer un tel message à destination du noeud de calcul considéré et ce pendant au moins pendant les deux derniers cycles de fonctionnement du noeud associé à l'absence de message, et d'autre part à exploiter la présence de chaque message en provenance d'un autre noeud comme une participation collaborative de cet autre noeud à l'élaboration d'une synthèse locale de l'état du réseau vue par le noeud considéré.

Autrement dit, le procédé selon la présente invention permet ainsi une remontée collaborative d'un dysfonctionnement du réseau global ou d'un dysfonctionnement d'un noeud de calcul, et ce indépendamment de la topologie de réseau mise en oeuvre, tout en s'affranchissant de l'analyse de cas dégradés de fonctionnement de ce réseau.

La présente invention permet donc d'obtenir au sein de chaque noeud de calcul opérationnel un contexte fonctionnel cohérent, à chaque instant, d'un noeud de calcul à un autre. Autrement dit, grâce à la présente invention, chaque noeud de calcul opérationnel partage et consolide une vision commune et consolidée par les autres noeuds de calcul opérationnels.

Suivant d'autres aspects avantageux de l'invention, le procédé de communication comprend une ou plusieurs des caractéristiques suivantes, prises isolément ou suivant toutes les combinaisons techniquement possibles :

- le procédé comprend en outre une étape de publication locale, par ledit noeud de calcul courant, de la synthèse globale associée aux données reçues lors de l'étape de réception du cycle courant, en présence, d'une égalité entre la vision locale et la synthèse locale, et d'une égalité entre toutes les synthèses locales, comprenant la synthèse locale vue par ledit noeud de calcul courant et les synthèses locales reçues des autres noeuds de calcul, la synthèse globale correspondant alors à la synthèse locale ;

- le procédé comprend en outre une étape de publication locale, par ledit noeud de calcul courant, de la synthèse globale associée aux données reçues lors de l'étape de réception du cycle courant, lorsque ladite synthèse globale a été publiée par un autre noeud de calcul de ladite pluralité et distinct dudit noeud de calcul courant, avant détermination, par ledit noeud de calcul courant, d'une égalité entre la vision locale et la synthèse locale, et d'une égalité entre toutes les synthèses locales, comprenant la synthèse locale vue par ledit noeud de calcul courant et les synthèses locales reçues des autres noeuds de calcul ;

- en cas d'écart(s) entre la synthèse locale de l'état de fonctionnement dudit réseau vue par ledit noeud de calcul courant et au moins une des synthèses locales reçues des autres noeuds de calcul, le procédé comprend une étape de signalement d'une instabilité de la vision des noeuds de calcul opérationnels dudit réseau ;

- la phase de démarrage/redémarrage de chaque noeud de calcul comprend une étape préalable d'initialisation dudit procédé par lecture d'une configuration statique prédéterminée contenant une liste d'initialisation identifiant chaque noeud de calcul présent théoriquement au sein de ladite pluralité de noeuds de calcul, et leur mode de communication respectif ;

- chaque noeud de calcul est associé à un indice prédéterminé, et dans lequel, au sein de la synthèse globale, le noeud de calcul de valeur d'indice la plus faible prend le rôle de maître d'une heure commune à tous les noeuds de calcul identifiés au sein de ladite synthèse globale, et chaque autre noeud de calcul opérationnel identifié au sein de ladite synthèse globale est un noeud de calcul esclave propre à assurer le recalage de son heure locale sur celle du noeud de calcul maître ;

- un noeud de calcul esclave assure le recalage de son heure locale sur celle du noeud de calcul maître en adaptant, selon une fonction affine, la vitesse de progression de son heure locale pour se rapprocher sans discontinuité de la vitesse de progression de l'heure du noeud de calcul maître, la fonction affine dépendant d'un seuil de déclenchement prédéterminé commun à chaque noeud de calcul de ladite pluralité de noeuds de calcul, et d'un temps de convergence prédéterminé propre à chaque noeud de calcul.

L'invention a également pour objet un programme d'ordinateur comportant des instructions logicielles qui, lorsqu'elles sont exécutées par un ordinateur, mettent en oeuvre un tel procédé de communication.

L'invention a également pour objet un noeud de calcul d'un réseau de calculateur(s) comprenant une pluralité de noeuds de calcul interconnectés au sein dudit réseau, ledit noeud de calcul comprenant :

- un module d'émission, configuré pour émettre à chaque cycle courant après une phase de démarrage/redémarrage dudit noeud de calcul, vers tous les autres noeuds de calcul de ladite pluralité de noeuds de calcul, un message d'évaluation locale de l'état dudit réseau, ledit message comprenant au moins :

  - une vision locale de l'état de fonctionnement dudit réseau vue par ledit noeud de calcul, ladite vision locale correspondant à la liste des autres noeuds de calcul de ladite pluralité de noeuds de calcul, dont ledit noeud de calcul a reçu un message d'évaluation associé à un cycle précédent le cycle courant,
  - une synthèse locale de l'état de fonctionnement dudit réseau vue par ledit noeud de calcul courant, ladite synthèse locale correspondant à l'intersection de la vision locale dudit noeud de calcul courant et des visions locales émises au cours d'un cycle précédent à destination dudit noeud de calcul par les autres noeuds de calcul de ladite pluralité de noeuds de calcul,
- une dernière synthèse globale de l'état de fonctionnement dudit réseau publiée localement par ledit noeud de calcul, ladite synthèse globale correspondant à une synthèse locale commune à tous les noeuds de calcul opérationnels de ladite pluralité de noeuds de calcul,

- un module de réception, configuré pour recevoir à chaque cycle courant, un message d'évaluation locale de l'état dudit réseau émis par chaque autre noeud de calcul de ladite pluralité de noeuds de calcul, chaque message d'évaluation reçu en provenance d'un autre noeud de calcul distinct dudit noeud de calcul courant comprenant réciproquement au moins :

  - une vision locale de l'état de fonctionnement dudit réseau vue par ledit autre noeud de calcul distinct dudit noeud de calcul courant,
  - une synthèse locale de l'état de fonctionnement dudit réseau vue par ledit autre noeud de calcul distinct dudit noeud de calcul courant,
  - une dernière synthèse globale de l'état de fonctionnement dudit réseau publiée localement par ledit autre noeud de calcul distinct dudit noeud de calcul courant;

- un module de traitement et d'analyse configuré pour traiter et analyser des dernières données reçues, au cours d'un cycle sur deux, et générer à chaque mise en oeuvre un message d'évaluation locale de l'état dudit réseau vu par ledit noeud de calcul courant, associé auxdites dernières données reçues,

le message émis à chaque cycle d'émission correspondant au dernier message généré par ledit module de traitement.

L'invention a également pour objet un réseau de calculateurs comprenant une pluralité de noeuds de calcul interconnectés au sein dudit réseau, chacun desdits noeuds de calcul de ladite pluralité étant un noeud de calcul du type précité selon la présente invention.

Selon un aspect particulier, le réseau de calculateurs est un réseau de calculateurs avioniques.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- [Fig. 1] la figure 1 est une représentation schématique d'un réseau de calculateurs formé d'une pluralité de noeuds de calculs selon la présente invention ;
- [Fig. 2] la figure 2 est un chronogramme représentatif d'un enchainement d'étapes du procédé de communication selon la présente invention mises en oeuvre par un même noeud de calcul durant sept cycles de fonctionnement successifs ;
- [Fig. 3] la figure 3 est un organigramme de la publication locale mise en oeuvre par chaque noeud de calcul selon la présente invention.

Dans la présente description, sauf autre précision, les expressions « sensiblement », « environ », « approximativement » et « de l'ordre de » définissent une relation d'égalité à plus ou moins 10%, de préférence à plus ou moins 5%.

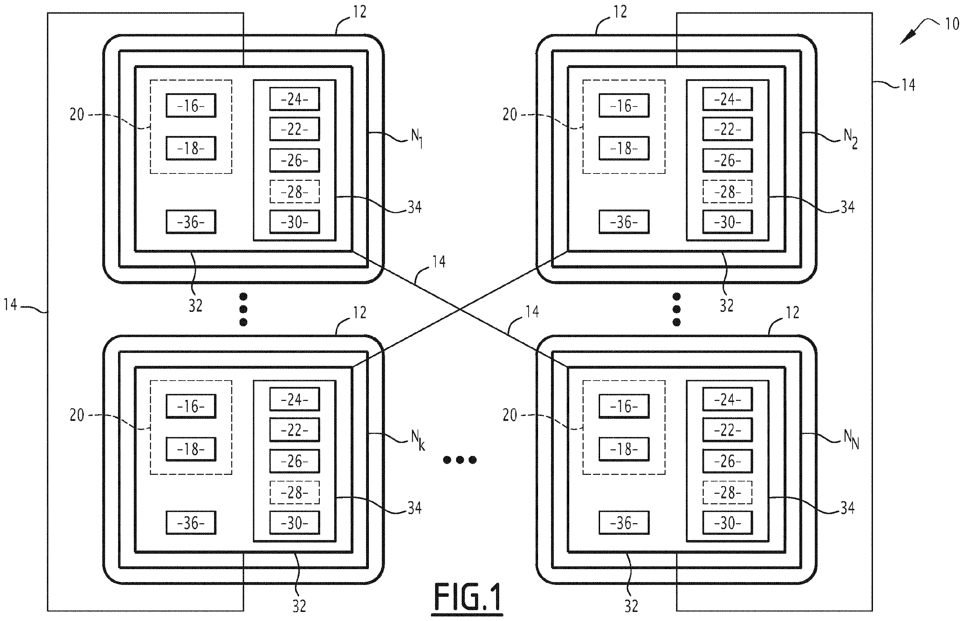

Sur la figure 1, le réseau de communication 10 est un réseau de calculateurs 12 d'un système, notamment un système critique, par exemple un réseau de calculateurs 12 avioniques au sein d'un aéronef non représenté, ou tout autre réseau 10 de calculateurs 12 de système critique dont, par définition, le bon fonctionnement doit être garanti.

Selon la représentation de la figure 1, chaque calculateur 12 comprend un noeud de calcul tel que le noeud $N_1$, $N_2$, ... $N_k$, ... ou encore $N_N$ formant une pluralité de N noeuds de calculs interconnectés via des liaisons de données 14. Selon un autre mode de réalisation, non représenté, chaque calculateur comprend un à plusieurs noeuds de calculs distincts.

Dans un tel réseau, l'acheminement d'un message entre un noeud émetteur et un noeud destinataire est propre à utiliser des noeuds intermédiaires pour relayer le message et s'appuie alors sur un mécanisme de routage.

Pour ce faire, selon le mode de réalisation de la figure 1, chaque calculateur avionique 12 comprend par exemple en outre un module de routage, non représenté, disposé à l'intérieur du boîtier non représenté du calculateur 12, le module de routage comportant plusieurs ports de communication non représentés et étant configuré pour transmettre au moins un message depuis l'un des ports de communication, formant port de communication d'entrée, vers l'un des ports de communication, formant port de communication de sortie d'un autre calculateur.

A titre d'alternative non représentée, un tel module de routage est directement embarqué dans chaque noeud de calcul et non dans chaque calculateur.

Dans l'exemple de la figure 1, les calculateurs avioniques 14 sont alors reliés entre eux via les liaisons externes 16 et forment en outre le réseau de communication 20 de par les modules de routage 36 intégrés à chaque calculateur avionique 14 et remplissant chacun la fonction de routage d'un commutateur réseau.

Selon la présente invention, chaque noeud de calcul $N_1$, $N_2$, ... $N_k$, ... ou encore $N_N$ se caractérise par un fonctionnement cyclique et comprend au moins un module d'émission 16 et un module de réception 18.

Le module d'émission 16 est configuré pour émettre à chaque cycle courant $C_i$ après une phase de démarrage/redémarrage du noeud de calcul considéré, par exemple le noeud $N_1$, vers tous les autres noeuds de calcul $N_2$, ..., $N_N$ de la pluralité de noeuds de calcul, un message $M_i$ d'évaluation locale de l'état dudit réseau 10, le message $M_i$ comprenant au moins un triplet d'informations à savoir :

- une vision locale $V_{i\_N1}$ de l'état de fonctionnement dudit réseau 10 vue par le noeud de calcul $N_1$, cette vision locale correspondant à la liste des autres noeuds de calcul de ladite pluralité de noeuds de calcul, dont le noeud de calcul $N_1$ a reçu un message d'évaluation associé à un cycle précédent le cycle courant $C_i$,
- une synthèse locale $S_{i\_N1}$ de l'état de fonctionnement dudit réseau vue par le noeud de calcul courant $N_1$, ladite synthèse locale $S_{i\_N1}$ correspondant à l'intersection de la vision locale $V_{i\_N1}$ dudit noeud de calcul courant en termes d'état de fonctionnement et des visions locales émises en termes d'état de fonctionnement, au cours d'un cycle précédent, à destination du noeud de calcul $N_1$ par les autres noeuds de calcul $N_2$, ..., $N_N$ de ladite pluralité de noeuds de calcul,
- une dernière synthèse globale G de l'état de fonctionnement du réseau 10 publiée localement par le noeud de calcul $N_1$, ladite synthèse globale G correspondant à une synthèse locale de l'état de fonctionnement du réseau commune à tous les noeuds de calcul opérationnels de ladite pluralité de noeuds de calcul.

En variante complémentaire, un tel message comprend en plus du triplet précité relatif à l'état de fonctionnement de chaque noeud de calcul du réseau, explicitement un identifiant du noeud de calcul émetteur d'un tel message, un tel identifiant correspondant, par exemple, à un indice i prédéterminé, et également un quadruplet d'informations relatives à une synchronisation en terme de référence horaire commune, un tel quadruplet comprenant l'état de synchronisation en terme de référence horaire commune du noeud de calcul considéré, par exemple le noeud de calcul $N_1$, un tel état correspondant à une valeur, notamment binaire représentative d'un état synchronisé ou non, sa vision locale courante de l'état de synchronisation, en terme de référence horaire commune, des autres noeuds opérationnels du système, sa vision consolidée par les autres noeuds opérationnels du système de l'état de synchronisation en terme de référence horaire commune des autres noeuds opérationnels du système, le dernier état de synchronisation global en terme de référence horaire commune associé à l'ensemble de noeuds opérationnels. Ces éléments permettant d'établir et suivre une référence horaire commune comme décrit par la suite.

Autrement dit, pour la synchronisation en terme de référence horaire commune au noeuds de calcul opérationnels, chaque message d'évaluation locale de l'état du réseau, comprend également une vision locale, une vision consolidée et un dernier état de synchronisation globale, déterminé respectivement de manière similaire au triplet d'informations précédemment décrit relatif à l'état de fonctionnement de chaque noeud de calcul.

Plus précisément, pour la synchronisation en terme de référence horaire commune, la vision locale de l'état de synchronisation correspond à une liste de valeurs d'état de synchronisation, parmi deux valeurs, notamment binaires représentatives d'un état synchronisé ou non, de chaque noeud de calcul dont le noeud de calcul considéré, par exemple le noeud de calcul $N_1$, a reçu un message d'évaluation. La vision consolidée d'état de synchronisation en terme de référence horaire commune vue localement par le noeud de calcul considéré, par exemple le noeud de calcul $N_1$, correspond à l'intersection des vision locale de l'état de synchronisation dudit noeud de calcul courant et des visions locales émises en termes d'état de synchronisation sur une référence horaire commune, au cours d'un cycle précédent, à destination du noeud de calcul $N_1$ par les autres noeuds de calcul $N_2$, ..., $N_N$ de ladite pluralité de noeuds de calcul.

Le dernier état de synchronisation global en terme de référence horaire commune associé à l'ensemble de noeuds est une synthèse locale de l'état de synchronisation du réseau commune à tous les noeuds de calcul opérationnels de ladite pluralité de noeuds de calcul.

Par la suite, l'homme du métier comprendra donc, que selon la présente invention, le message d'évaluation locale comprend d'une part au moins un triplet d'informations relatif à l'état de fonctionnement de chaque noeud de calcul du réseau et d'autre part en complément facultatif un quadruplet d'informations relatif à leur état de synchronisation. La vision locale d'état de fonctionnement étant obtenue de manière similaire à la vision locale d'état de synchronisation, mais à partir de données d'entrées distinctes respectivement relatives à des données d'état de fonctionnement et des données d'état de synchronisation. Il en est de même pour la synthèse locale d'état de fonctionnement et la vision consolidée d'état de synchronisation, et pour la dernière synthèse globale de l'état de fonctionnement et le dernier état de synchronisation global.

Le module de réception 18 est quant à lui configuré pour recevoir à chaque cycle courant $C_i$, un message d'évaluation locale de l'état dudit réseau 10 émis par chaque autre noeud de calcul $N_2$, ..., $N_N$ de ladite pluralité de noeuds de calcul, chaque message $M_{i\_Nk}$ d'évaluation reçu en provenance d'un autre noeud de calcul, par exemple le noeud $N_k$, distinct dudit noeud de calcul courant considéré, par exemple le noeud de calcul $N_1$ comprenant réciproquement

au moins :

- une vision locale $V_{i\_Nk}$ de l'état de fonctionnement dudit réseau vue par ledit autre noeud de calcul $N_k$ distinct dudit noeud de calcul courant $N_1$,
- une synthèse locale $S_{i\_Nk}$ de l'état de fonctionnement dudit réseau vue par ledit autre noeud de calcul $N_k$ distinct dudit noeud de calcul courant $N_1$,
- une dernière synthèse globale G de l'état de fonctionnement dudit réseau publiée localement par ledit autre noeud de calcul $N_k$ distinct dudit noeud de calcul courant $N_1$.

Selon une variante optionnelle particulière de réalisation, le module d'émission 16 et le module de réception 18 sont combinés au sein d'un dispositif d'émission-réception 20 afin de mutualiser par exemple l'utilisation d'une même antenne d'émission-réception. Selon une autre variante, le module d'émission 16 et le module de réception 18 sont indépendants l'un de l'autre.

Selon la présente invention, chaque noeud de calcul comprend en outre un module d'initialisation 22, un module de traitement et d'analyse 24, un module de publication locale 26, un module optionnel de signalement 28, un module de gestion de l'heure 30.

Plus précisément, le module d'initialisation 22 est notamment configuré pour être activé au cours d'une phase de démarrage/redémarrage de chaque noeud de calcul, et configuré pour lire une configuration statique prédéterminée contenant une liste d'initialisation identifiant chaque noeud de calcul présent théoriquement au sein de ladite pluralité de noeuds de calcul, et leur mode de communication respectif.

Le module de traitement et d'analyse 24 est configuré pour traiter et analyser les dernières données reçues par le module de réception 18, et ce au cours d'un cycle sur deux, et générer à chaque mise en oeuvre un message d'évaluation locale de l'état du réseau 10 vu par le noeud de calcul courant considéré en termes d'état de fonctionnement, et en complément en termes d'état de synchronisation de chaque noeud de calcul opérationnels du réseau, par exemple le noeud $N_1$, associé aux dernières données reçues, le message $M_i$ émis à chaque cycle d'émission, par le module d'émission 16, correspondant au dernier message généré par ledit module de traitement et d'analyse 24.

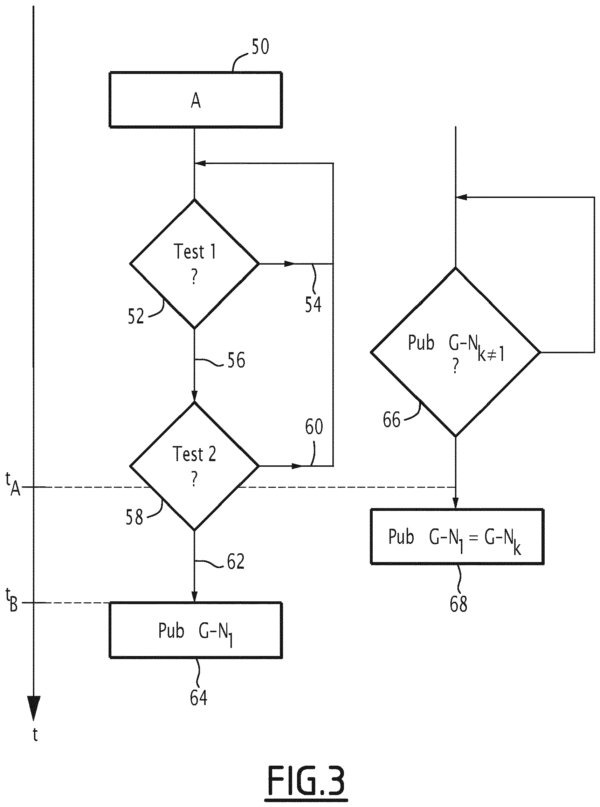

Le module de publication locale 26 est configuré pour fournir une information à destination d'une fonction (i.e. une application fonctionnelle/opérationnelle) du noeud local considéré, cette fonction ayant besoin de connaître la configuration du réseau 10 pour fonctionner correctement et garantir ainsi le bon fonctionnement du système critique associé au réseau 10 de calculateurs 12. Le fonctionnement d'un tel module de publication locale 26 est détaillé par la suite en relation avec la figure 3.

Le module optionnel de signalement 28 est configuré pour signaler une instabilité de la vision des noeuds de calcul opérationnels dudit réseau, en cas d'écart(s) entre la synthèse locale $S_{i\_N1}$ de l'état de fonctionnement dudit réseau vue par ledit noeud de calcul courant, par exemple le noeud $N_1$ et au moins une des synthèses locales reçues des autres noeuds de calcul $N_2$, ..., $N_N$. Autrement dit, un tel module de signalement 28 comprend par exemple, pour aboutir à un tel signalement, un comparateur de synthèses locales et un outil de génération d'alerte afin d'alerter l'utilisateur du réseau 10 de calculateur(s) 12, tel que, par exemple, un pilote à bord d'un aéronef, non représenté. Autrement dit, un tel module de signalement est propre à remonter un « résultat de santé » du réseau considéré (i.e. une perte d'intégrité) temporaire, voire récurrente.

Le module de gestion de l'heure 30, est configuré pour garantir, dans la continuité (i.e. à chaque instant), une heure cohérente entre chaque noeud de calcul de la pluralité de noeuds de calculs $N_1$, $N_2$, ... $N_k$, ... ou encore $N_N$. Pour ce faire, au sein du réseau 10 considéré chaque noeud de calcul $N_1$, $N_2$, ... $N_k$, ... ou encore $N_N$ est associé à un indice k prédéterminé avec $1 \leq k \leq N$, et au sein de la synthèse globale G, le module de gestion de l'heure 30 détecte le noeud de calcul de valeur d'indice la plus faible qui prend le rôle de maître d'une heure commune à tous les noeuds de calcul identifiés au sein de ladite synthèse globale G, et chaque autre noeud de calcul opérationnel identifié au sein de ladite synthèse globale G est un noeud de calcul esclave propre à assurer le recalage de son heure locale sur celle du noeud de calcul maître. Autrement dit, l'heure locale générée par le module de gestion de l'heure 30 du noeud de calcul maître, par exemple le noeud de calcul $N_1$, est lue par l'ensemble des autres noeuds esclaves. De plus, selon la présente invention, le module de gestion de l'heure 30 d'un noeud de calcul esclave assure le recalage de son heure locale sur celle du noeud de calcul maître, en adaptant, selon une fonction affine, la vitesse de progression de son heure locale pour se rapprocher sans discontinuité de la vitesse de progression de l'heure du noeud de calcul maître, la fonction affine dépendant d'un seuil de déclenchement prédéterminé, notamment en fonction de la technologie dudit réseau 10, ledit seuil étant commun à chaque noeud de calcul de ladite pluralité de noeuds de calcul, et d'un temps de convergence prédéterminé propre à chaque noeud de calcul.

Plus précisément, un dépassement du seuil de déclenchement de ladite fonction affine, est représentatif d'un événement au sein du réseau rendant une approximation de l'heure commune impossible, et propre à générer une alerte pour signaler un tel évènement et le cas échéant un besoin de réparation et/ou de redémarrage.

Dans l'exemple de la figure 1, chaque noeud de calcul $N_1$, $N_2$, ... $N_k$, ... ou encore $N_N$ comprend une unité de traitement d'informations 32 formée par exemple d'une mémoire 34 associée à un processeur 36.

Dans l'exemple de la figure 1, le module d'initialisation 22, le module de traitement et d'analyse 24, le module de publication locale 26, le module optionnel de signalement 28, le module de gestion de l'heure 30 sont réalisés chacun sous forme d'un logiciel, ou d'une brique logicielle, exécutables par le processeur 36. La mémoire 34 est alors apte à stocker un logiciel d'initialisation configuré pour obtenir, notamment par lecture, une configuration statique prédéterminée contenant une liste d'initialisation identifiant chaque noeud présent théoriquement au sein de ladite pluralité de noeuds de calcul et leur mode de communication respectif. La mémoire 34 est également apte à stocker un logiciel de de traitement et d'analyse configuré pour traiter et analyser les dernières données reçues par le module de réception 18 et générer à chaque mise en oeuvre un message d'évaluation locale de l'état du réseau 10 vu par le noeud de calcul courant considéré, un logiciel de publication locale configuré pour publier localement la synthèse globale G associées aux données reçues, un logiciel optionnel de signalement configuré pour signaler une instabilité de la vision des noeuds de calculs opérationnels du réseau, et un logiciel de gestion de l'heure de fonctionnement. Le processeur 36 de l'unité de traitement d'informations 32 est alors apte à exécuter le logiciel d'initialisation, le logiciel de traitement et d'analyse, le logiciel de publication locale, le logiciel optionnel de signalement, le logiciel de gestion de l'heure.

En variante non représentée, le module d'initialisation 22, le module de traitement et d'analyse 24, le module de publication locale 26, le module optionnel de signalement 28, le module de gestion de l'heure 30 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit)*.

Lorsqu'un noeud de calcul selon la présente invention, tel que chacun des noeuds de calcul $N_1$, $N_2$, ... $N_k$, ... ou encore $N_N$ est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

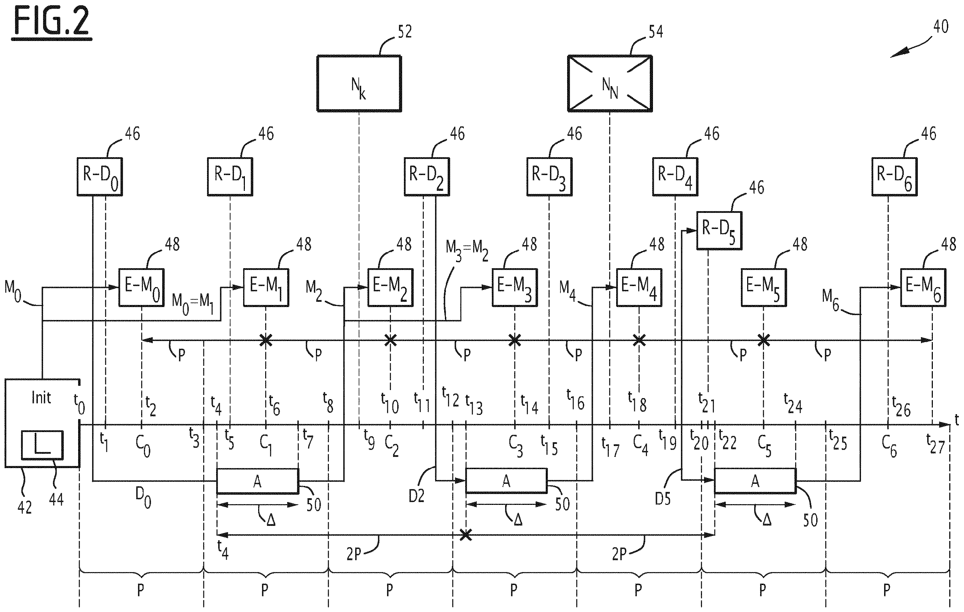

Le fonctionnement collaboratif du réseau 10 de calculateurs 12 comprenant la pluralité de noeuds de calcul $N_1$, $N_2$, ..., $N_N$ va désormais être expliqué à l'aide de la figure 2 représentant un chronogramme représentatif d'un enchainement d'étapes du procédé 40 de communication selon la présente invention mises en oeuvre par un même noeud de calcul, par exemple le noeud de calcul $N_1$, durant sept cycles $C_0$, $C_1$, ..., $C_6$ de fonctionnement successifs selon l'axe horizontal des temps t.

Au préalable, lors d'une étape 42, le noeud de calcul $N_1$, comme tous les autres noeuds de calculs $N_2$, ..., $N_N$, met en oeuvre, au cours d'une phase de démarrage/redémarrage non représentée, via son module d'initialisation 22, une étape préalable d'initialisation du procédé comprenant une étape 44 de lecture d'une configuration statique prédéterminée contenant une liste L d'initialisation identifiant chaque noeud de calcul présent théoriquement au sein de ladite pluralité de noeuds de calcul du réseau 10 considéré, et leur mode de communication respectif. Selon un aspect particulier une telle liste est vide.

Sur la figure 2, à partir de cette liste L un premier message $M_0$ est généré par le module de traitement et d'analyse 24, le message $M_0$ comprenant au moins :

- une vision locale $V_{0\_N1}$ de l'état de fonctionnement dudit réseau 10 vue par le noeud de calcul courant $N_1$, la vision locale correspondant à la liste L d'initialisation,
- une synthèse locale $S_{0\_N1}$ de l'état de fonctionnement du réseau vue par le noeud de calcul courant, ladite synthèse locale $S_{0\_N1}$ correspondant également à la liste L d'initialisation,
- une synthèse globale G de l'état de fonctionnement du réseau publiée localement par le noeud de calcul courant, la synthèse globale G correspondant également à ce stade à la liste L d'initialisation.

En particulier, si la liste L est vide, le message $M_0$ associé est alors uniquement propre à être diffusé sur l'ensemble du réseau 10 et à informer les autres noeuds de calcul que le noeud de calcul courant $N_1$ est opérationnel sans connaissance à l'avance d'un potentiel état de fonctionnement des autres noeuds de calcul.

En complément, tel qu'indiqué précédemment, chaque message généré selon le procédé de la présente invention comprend également en plus du triplet précité relatif à l'état de fonctionnement de chaque noeud de calcul du réseau, explicitement un identifiant du noeud de calcul émetteur d'un tel message, un tel identifiant correspondant, par exemple, à un indice i prédéterminé, et également le quadruplet précité d'informations relatives à une synchronisation en terme de référence horaire commune.

Sur la figure 2, chaque cycle $C_0$, $C_1$, ..., $C_6$ est de durée identique P. Le premier cycle $C_0$ débute au temps $t_0$ correspondant à la fin de l'étape d'initialisation 42.

Au cours de ce cycle $C_0$, et plus précisément lors d'une première étape 46 de réception R-$D_0$ à l'instant $t_1$ avec

$t_1 > t_0$, le noeud de calcul $N_1$, via son module de réception 18, reçoit un message $M_{0\_Nj}$, avec $j \neq 1 \neq N$, d'évaluation locale de l'état dudit réseau émis par chaque autre noeud de calcul de ladite pluralité de noeuds de calcul, par exemple par chacun des trois autres noeuds de calcul $N_2$, $N_j$, et $N_N$, chaque message $M_{0\_Nj}$ d'évaluation reçu en provenance d'un autre noeud de calcul $N_j$ distinct du noeud de calcul courant $N_1$ comprenant réciproquement au moins :

- une vision locale $V_{0\_Nj}$ de l'état de fonctionnement dudit réseau vue par le noeud de calcul $N_j$ distinct du noeud de calcul courant $N_1$,
- une synthèse locale $S_{0\_Nj}$ de l'état de fonctionnement du réseau vue par le noeud de calcul $N_j$ distinct du noeud de calcul courant $N_1$,
- une dernière synthèse globale G de l'état de fonctionnement du réseau publiée localement par l'autre noeud de calcul $N_j$ distinct du noeud de calcul courant $N_1$.

L'ensemble des messages reçus $M_{0\_N2}$, ..., $M_{0\_Nj}$, ..., $M_{0\_NN}$ émis par chaque autre noeud de calcul $N_2$, ..., $N_N$ de ladite pluralité de noeuds de calcul forme un ensemble de donnée $D_0$.

Au cours de ce cycle $C_0$, et plus précisément lors d'une première étape 48 d'émission E-$M_0$ à l'instant $t_2$ avec $t_2 > t_1$, le noeud de calcul $N_1$, via son module d'émission 16, émet le message $M_0$ (ou encore $M_{0\_N1}$) précédemment généré lors de l'étape d'initialisation 42 à destination de tous les autres noeuds de calculs $N_2$, ..., $N_N$.

Chaque étape d'émission 48 est périodique, par exemple selon une période P, de sorte à être mise en oeuvre à chaque cycle de fonctionnement $C_0$, $C_1$, ..., $C_6$.

Le cycle $C_0$ de durée P se termine à l'instant $t_3$ avec $t_3 > t_2$, tandis que le cycle $C_1$ débute au même instant $t_3$. La durée P de chaque cycle correspond à un compromis prédéterminé entre la charge de calcul requise, la latence de détection d'une erreur réseau ou de disparition d'un noeud de calcul.

A l'instant $t_4$ avec $t_4 > t_3$, une première étape 50 de traitement et d'analyse A des dernières données reçues, à savoir les données $D_0$, est mise en oeuvre un cycle sur deux par le module de traitement et d'analyse 24 du noeud de calcul $N_1$. Une telle exploitation des dernières données reçues un cycle sur deux permet d'éviter des procédures de synchronisation d'envoi/réception de message(s) ou de recalage temporel spécifiques entre tous les noeuds de calculs.

Une telle étape de traitement et d'analyse A de durée $\Delta$, est un traitement périodique, selon une période 2*P, de sorte à être mise en oeuvre un cycle de fonctionnement sur deux à savoir par exemple tel qu'illustré sur la figure 2 aux cycles d'indices impairs $C_1$, $C_3$, $C_5$. Une telle période 2*P double de la période d'émission P permet d'identifier la non-réception d'information émise par un autre noeud comme une absence de bon fonctionnement de celui-ci sans avoir besoin de synchroniser les mécanismes d'envoi des messages selon la présente invention.

A l'instant $t_5$ avec $t_5 > t_4$, alors que la première étape 50 de traitement et d'analyse A est toujours en cours de réalisation, le noeud de calcul courant $N_1$ met en oeuvre une deuxième étape 46 de réception R-$D_1$, via son module de réception 18, et reçoit un message $M_{1\_Nj}$, avec $j \neq 1 \neq N \neq 2$ d'évaluation locale de l'état dudit réseau émis par chaque autre noeud de calcul de ladite pluralité de noeuds de calcul, par exemple par chacun des autres noeuds de calcul $N_2$, ..., $N_N$.

L'ensemble des messages reçus $M_{0\_N2}$, ..., $M_{0\_Nj}$, ..., $M_{0\_NN}$ émis par chaque autre noeud de calcul $N_2$, ..., $N_N$ de ladite pluralité de noeuds de calcul forme un ensemble de donnée $D_1$.

A l'instant $t_5$ avec $t_6 > t_5$, et tel que $t_6 - t_2 = P$, le noeud de calcul courant $N_1$ met en oeuvre une deuxième étape 48 d'émission E-$M_1$, via son module d'émission 16, et émet le message $M_1$ (ou encore $M_{1\_N1}$). A ce stade, la première étape 50 de traitement et d'analyse A, débutée à l'instant $t_4$, est toujours en cours de réalisation, si bien que le message $M_1$ (ou encore $M_{1\_N1}$) transmis par le module d'émission 16 reste identique au message $M_0$ transmis au cycle précédent $C_0$.

A l'instant $t_7$ avec $t_7 > t_6$, et tel que $t_7 - t_4 = \Delta$, la première étape 50 de traitement et d'analyse A des dernières données reçues, à savoir les données $D_0$ est terminée et le module de traitement et d'analyse 24 du noeud de calcul $N_1$ génère un message $M_2$ d'évaluation locale de l'état dudit réseau vu par ledit noeud de calcul courant $N_1$ associé aux dernières données reçues $D_0$ avant son l'instant de début $t_4$ de la première étape de traitement 50. En effet, l'instant $t_7$ est postérieur à l'instant d'émission périodique $t_6$ si bien que le message généré sera émis au cycle suivant $C_2$.

Plus précisément, le message $M_2$ comprend au moins une vision locale $V_{2\_N1}$ de l'état de fonctionnement dudit réseau 10 vue par le noeud de calcul courant $N_1$, ladite vision locale correspondant à la liste des autres noeuds de calcul de ladite pluralité de noeuds de calcul, dont le noeud de calcul courant $N_1$ a reçu un message d'évaluation associé aux dernières données reçues $D_0$. Par exemple, $D_0$ comprenait uniquement trois messages à savoir $M_{0\_N2}$, $M_{0\_Nj}$, $M_{0-NN}$, avec $j \neq N \neq 2$, si bien que $V_{2\_N1} = [N_1, N_2, N_j, N_N]$.

Le message $M_2$ comprend en outre une synthèse locale $S_{2\_N1}$ de l'état de fonctionnement dudit réseau vue par le noeud de calcul courant $N_1$, la synthèse locale $S_{2\_N1}$ correspondant à l'intersection de la vision locale $V_{2\_N1} = [N_1, N_2, N_j, N_N]$ du noeud de calcul courant $N_1$ et des visions locales $V_{0\_N2}$, $V_{0\_Nj}$, $V_{0\_NN}$ émises, au cours d'un cycle précédent, à destination dudit noeud de calcul courant $N_1$, par les autres noeuds de calcul $N_2$, $N_j$, $N_N$.

Autrement dit,

$$S_{2\_N1} = V_{2\_N1} \cap V_{0\_N2} \cap V_{0\_Nj} \cap V_{0\_NN}.$$

Le message $M_2$ comprend en outre la dernière synthèse globale G de l'état de fonctionnement du réseau publiée localement par le noeud de calcul courant $N_1$, ladite synthèse globale G correspondant à une synthèse locale commune à, et consolidée par, tous les noeuds de calcul opérationnels, par exemple $N_1$, $N_2$, $N_j$, $N_N$ de ladite pluralité de noeuds de calcul. Le mécanisme de publication locale selon la présente invention est détaillé par la suite en relation avec la figure 3.

Le cycle $C_1$ de durée P se termine à l'instant $t_8$ avec $t_8 > t_7$, tandis que le cycle $C_2$ débute au même instant $t_8$.

Au cours de ce troisième cycle $C_2$, à un instant $t_9$, le noeud de calcul $N_k$ démarre (ou redémarre) et de son côté, de la même manière que le noeud de calcul $N_1$, met en oeuvre les étapes 46 de réception, 48 d'émission et 50 de traitement et d'analyse précitées. Le noeud de calcul $N_1$, qui auparavant (i.e. avant l'instant $t_9$) ne recevait aucune contribution du noeud de calcul $N_k$, est donc propre à désormais recevoir des messages selon la présente invention en provenance de ce noeud de calcul $N_k$, sauf perte d'intégrité au niveau de la liaison 14 qui le relie à ce noeud de calcul $N_k$.

A l'instant $t_{10}$ avec $t_{10} > t_9$, et tel que $t_{10}-t_6=P$, le noeud de calcul courant $N_1$ met en oeuvre une troisième étape 48 d'émission E-$M_2$, via son module d'émission 16, et émet le message $M_2$ (ou encore $M_{2\_N1}$) précédemment décrit.

A l'instant $t_{11}$ avec $t_{11} > t_{10}$, le noeud de calcul courant $N_1$ met en oeuvre une troisième étape 46 de réception R-$D_2$, via son module de réception 18, et reçoit un message $M_{2\_Nj}$, avec $j \neq 1$ d'évaluation locale de l'état dudit réseau émis par chaque autre noeud de calcul $N_j$ avec $j \neq 1$ de ladite pluralité de noeuds de calcul, par exemple par chacun des autres noeuds de calcul $N_2$, $N_{j \neq 1 \neq k \neq N \neq 2}$, $N_{k \neq 1 \neq j \neq N \neq 2}$, $N_{N \neq 1 \neq j \neq k \neq 2}$.

L'ensemble des messages reçus $M_{2\_N2}$, $M_{2\_Nj}$, $M_{2\_Nk}$, $M_{2\_NN}$ émis par chaque autre noeud de calcul $N_2$, $N_{j \neq 1 \neq k \neq N}$, $N_{k \neq 1 \neq j \neq N}$, $N_{N \neq 1 \neq j \neq k}$ forme un ensemble de donnée $D_2$.

Le cycle $C_2$ de durée P se termine à l'instant $t_{12}$ avec $t_{12} > t_{11}$, tandis que le cycle $C_3$ débute au même instant $t_{12}$.

A l'instant $t_{13}$ avec $t_{13} > t_{12}$ et tel que $t_{13}-t_4=2*P$, une deuxième étape 50 de traitement et d'analyse A, de durée $\Delta$, des dernières données reçues, à savoir les données $D_2$, est mise en oeuvre un cycle sur deux par le module de traitement et d'analyse 24 du noeud de calcul $N_1$.

Lors de ce deuxième traitement 50, le module de traitement et d'analyse 24 du noeud de calcul $N_1$ détermine le message $M_4$ comprenant au moins une vision locale $V_{4\_N1}$ de l'état de fonctionnement dudit réseau 10 vue par le noeud de calcul courant $N_1$, ladite vision locale correspondant à la liste des autres noeuds de calcul de ladite pluralité de noeuds de calcul, dont le noeud de calcul courant $N_1$ a reçu un message d'évaluation associé aux dernières données reçues $D_2$. Par exemple, $D_2$ comprenait uniquement quatre messages à savoir $M_{2\_N2}$, $M_{2\_Nj}$, $M_{2\_Nk}$, $M_{2\_NN}$ avec $j \neq N \neq 2 \neq k \neq 1$ et $k \neq N \neq 2 \neq j \neq 1$, si bien que : $V_{4\_N1} = [N_1, N_2, N_j, N_k, N_N]$. En effet le noeud $N_{k \neq 1 \neq j \neq N \neq 2}$, qui comme on l'a vu est opérationnel depuis l'instant $t_9$, est ajouté par rapport à la vision locale $V_{2\_N1}$ précédente.

Le message $M_4$ comprend en outre une synthèse locale $S_{4\_N1}$ de l'état de fonctionnement dudit réseau vue par le noeud de calcul courant $N_1$, la synthèse locale $S_{4\_N1}$ correspondant à l'intersection de la vision locale $V_{4\_N1} = [N_1, N_2, N_j, N_k, N_N]$ du noeud de calcul courant $N_1$ et des visions locales $V_{2\_N2}$, $V_{2\_Nj}$, $V_{2\_Nk}$, $V_{2\_NN}$ émises, au cours d'un cycle précédent, à destination dudit noeud de calcul courant $N_1$, par les autres noeuds de calcul $N_2$, $N_j$, $N_k$, $N_N$.

Autrement dit,

$$S_{4\_N1} = V_{4\_N1} \cap V_{2\_N2} \cap V_{2\_Nj} \cap V_{2\_Nk} \cap V_{2\_NN}.$$

Le message $M_4$ comprend en outre la dernière synthèse globale G de l'état de fonctionnement du réseau publiée localement par le noeud de calcul courant $N_1$, ladite synthèse globale G correspondant à une synthèse locale commune à tous les noeuds de calcul opérationnels, par exemple $N_1$, $N_2$, $N_j$, $N_k$, $N_N$ de ladite pluralité de noeuds de calcul. Le mécanisme de publication locale selon la présente invention est détaillé par la suite en relation avec la figure 3.

A l'instant $t_{14}$ avec $t_{14} > t_{13}$, et tel que $t_{14}-t_{10}=P$ et $t_{14}<t_{13}+\Delta$, le noeud de calcul courant $N_1$ met en oeuvre une quatrième étape 48 d'émission E-$M_3$, via son module d'émission 16, et émet le message $M_3$ (ou encore $M_{3\_N1}$). A ce stade, la deuxième étape 50 de traitement et d'analyse A, débutée à l'instant $t_{13}$ (i.e. $(t_{13}+\Delta)> t_{14}$), est toujours en cours de réalisation, si bien que le message $M_3$ (ou encore $M_{3\_N1}$) transmis par le module d'émission 16 reste identique au message $M_2$ transmis au cycle précédent $C_2$.

A l'instant $t_{15}$ avec $t_{15} > t_{14}$ et tel que $(t_{13}+\Delta)< t_{15}$, le noeud de calcul courant $N_1$ met en oeuvre une quatrième étape 46 de réception R-$D_3$, via son module de réception 18, et reçoit un message $M_{3\_Nj}$, avec $j \neq 1$ d'évaluation locale de l'état dudit réseau émis par chaque autre noeud de calcul $N_j$ avec $j \neq 1$ de ladite pluralité de noeuds de calcul, par exemple par chacun des autres noeuds de calcul $N_2$, $N_{j \neq 1 \neq k \neq N \neq 2}$, $N_{k \neq 1 \neq j \neq N \neq 2}$, $N_{N \neq 1 \neq j \neq k \neq 2}$.

Le cycle $C_3$ de durée P se termine à l'instant $t_{16}$ avec $t_{16} > t_{15}$, tandis que le cycle $C_4$ débute au même instant $t_{16}$.

Au cours de ce cinquième cycle $C_4$, à un instant $t_{17}$, le noeud de calcul $N_N$ est en panne ou la liaison 14 le connectant au noeud $N_1$ est interrompue. Le noeud de calcul $N_1$, qui auparavant (i.e. avant l'instant $t_{17}$) recevait une

contribution du noeud de calcul $N_N$, est donc désormais impropre à recevoir des messages selon la présente invention en provenance de ce noeud de calcul $N_N$.

A l'instant $t_{18}$ avec $t_{18} > t_{17}$, et tel que $t_{18} - t_{14} = P$, le noeud de calcul courant $N_1$ met en oeuvre une cinquième étape 48 d'émission E-$M_4$, via son module d'émission 16, et émet le message $M_4$ (ou encore $M_{4\_N1}$) établi au cours du cycle $C_3$ à l'issue de la deuxième étape 50 de traitement et d'analyse A, débutée à l'instant $t_{13}$.

A l'instant $t_{19}$ avec $t_{19} > t_{18}$, le noeud de calcul courant $N_1$ met en oeuvre une cinquième étape 46 de réception R-$D_4$, via son module de réception 18, et reçoit un message $M_{4\_Nj}$, avec $j \neq 1$ d'évaluation locale de l'état dudit réseau émis par chaque autre noeud de calcul $N_j$ avec $j \neq 1$ de ladite pluralité de noeuds de calcul, par exemple par chacun des autres noeuds de calcul $N_2, N_{j \neq 1 \neq k \neq N \neq 2}, N_{k \neq 1 \neq j \neq N \neq 2}$, mais pas par le noeud $N_{N \neq 1 \neq j \neq k \neq 2}$, qui comme on l'a vu à l'instant $t_{17}$, est soit en panne ou déconnecté de $N_1$, la liaison 14 le connectant au noeud $N_1$ étant interrompue.

Le cycle $C_4$ de durée P se termine à l'instant $t_{20}$ avec $t_{20} > t_{19}$, tandis que le cycle $C_5$ débute au même instant $t_{20}$.

A l'instant $t_{21}$ avec $t_{21} > t_{20}$, le noeud de calcul courant $N_1$ met en oeuvre une sixième étape 46 de réception R-$D_5$, via son module de réception 18, et reçoit un message $M_{5\_Nj}$, avec $j \neq 1$ d'évaluation locale de l'état dudit réseau émis par chaque autre noeud de calcul $N_j$ avec $j \neq 1$ de ladite pluralité de noeuds de calcul, par exemple par chacun des autres noeuds de calcul $N_2, N_{j \neq 1 \neq k \neq N \neq 2}, N_{k \neq 1 \neq j \neq N \neq 2}$, mais pas par le noeud $N_{N \neq 1 \neq j \neq k}$, qui comme on l'a vu à l'instant $t_{17}$, est soit en panne ou déconnecté de $N_1$, la liaison 14 le connectant au noeud $N_1$ étant interrompue.

L'ensemble des messages reçus $M_{5\_N2}$, $M_{5\_Nj}$, $M_{5\_Nk}$ émis par chaque autre noeud de calcul $N_2$, $N_{j \neq 1 \neq k \neq N \neq 2}$, $N_{k \neq 1 \neq j \neq N \neq 2}$, forme un ensemble de donnée $D_5$.

A l'instant $t_{22}$ avec $t_{22} > t_{21}$ et tel que $t_{22} - t_{13} = t_{13} - t_4 = 2 * P$, une troisième étape 50 de traitement et d'analyse A, de durée $\Delta$, des dernières données reçues, à savoir les données $D_5$, est mise en oeuvre un cycle sur deux par le module de traitement et d'analyse 24 du noeud de calcul $N_1$.

Lors de ce troisième traitement 50, le module de traitement et d'analyse 24 du noeud de calcul $N_1$ détermine le message $M_6$ comprenant au moins une vision locale $V_{6\_N1}$ de l'état de fonctionnement dudit réseau 10 vue par le noeud de calcul courant $N_1$, ladite vision locale correspondant à la liste des autres noeuds de calcul de ladite pluralité de noeuds de calcul, dont le noeud de calcul courant $N_1$ a reçu un message d'évaluation associé aux dernières données reçues $D_5$. Par exemple, $D_5$ comprenait uniquement trois messages à savoir $M_{5\_N2}$, $M_{5\_Nj}$, $M_{5\_Nk}$, avec $j \neq N \neq 2 \neq k \neq 1$ et $k \neq N \neq 2 \neq j \neq 1$, si bien que $V_{6\_N1} = [N_1, N_2, N_j, N_k]$ en effet le noeud $N_{N \neq 1 \neq j \neq k \neq 2}$, qui comme on l'a vu à l'instant $t_{17}$, est soit en panne ou déconnecté de $N_1$, la liaison 14 le connectant au noeud $N_1$ étant interrompue.

Ainsi, au cours du cycle $C_5$, la troisième étape 50 de traitement et d'analyse A exploite les dernières données reçues, à savoir les données $D_5$ reçues durant le même cycle courant $C_5$, alors que durant le cycle $C_3$, la deuxième étape 50 de traitement et d'analyse A exploitait les dernières données reçues, à savoir les données $D_2$ reçues durant le cycle courant $C_2$.

Le message $M_6$ comprend en outre une synthèse locale $S_{6\_N1}$ de l'état de fonctionnement dudit réseau vue par le noeud de calcul courant $N_1$, la synthèse locale $S_{6\_N1}$ correspondant à l'intersection de la vision locale $V_{6\_N1} = [N_1, N_2, N_j, N_k]$ du noeud de calcul courant $N_1$ et des visions locales $V_{5\_N2}$, $V_{5\_Nj}$, $V_{5\_Nk}$ émises, au cours d'un cycle précédent, à destination dudit noeud de calcul courant $N_1$, par les autres noeuds de calcul $N_2$, $N_j$, $N_k$.

Autrement dit,

$$S_{6\_N1} = V_{6\_N1} \cap V_{5\_N2} \cap V_{5\_Nj} \cap V_{5\_Nk}.$$

En particulier, pendant cette étape de détermination de synthèse locale $S_{6\_N1}$ si $V_{6\_N2} = [N_1, N_2, N_j, N_k]$, $V_{6\_Nj} = [N_1, N_2, N_j, N_k]$ et $V_{e\_Nk} = [N_1, N_2, N_k, N_j]$ alors le module de traitement et d'analyse 24 du noeud de calcul $N_1$ détermine, ou encore le module optionnel de signalement 28 détermine, que le noeud $N_{N \neq 1 \neq j \neq k \neq 2}$ est effectivement en panne, et une telle panne sera, le cas échéant, signalée au moins par le module optionnel de signalement 28 du noeud de calcul $N_1$, voire par chacun des autres noeuds $N_2$, $N_j$, $N_k$.

En revanche, pendant cette étape de détermination de synthèse locale $S_{6\_N1}$ si $V_{6\_N2} = [N_1, N_2, N_j, N_k, N_N]$, $V_{6\_Nj} = [N_1, N_2, N_j, N_k, N_N]$ et $V_{6\_Nk} = [N_1, N_2, N_j, N_k, N_N]$ alors le module de traitement et d'analyse 24 du noeud de calcul $N_1$ détermine, ou encore le module optionnel de signalement 28 détermine, que la liaison entre le noeud de calcul courant $N_1$ et le noeud de calcul $N_{N \neq 1 \neq j \neq k \neq 2}$ est interrompue, et une telle panne de liaison sera, le cas échéant, signalée au moins par le module optionnel de signalement 28 du noeud de calcul $N_1$, voire par chacun des autres noeuds $N_2$, $N_j$, $N_k$ et $N_N$ qui de son côté et réciproquement n'aura reçu aucun des messages émis par $N_1$ à partir de l'instant $t_{17}$.

Autrement dit, optionnellement, selon une étape de signalement non représentée, le module optionnel de signalement 28, est propre à signaler une instabilité de la vision des noeuds par rapport à la liste d'initialisation L identifiant chaque noeud présent théoriquement au sein de la pluralité de noeuds de calculs et leur mode de communication respectifs. De plus, le signalement est propre à identifier la nature de l'instabilité à savoir une panne de noeud de calcul ou une panne de liaison. Ainsi, une telle étape de signalement, non représenté, est propre à remonter un « résultat de santé » du réseau considéré (i.e. une perte d'intégrité) temporaire, voire récurrente.

Le message $M_6$ comprend en outre la dernière synthèse globale G de l'état de fonctionnement du réseau publiée localement par le noeud de calcul courant $N_1$, ladite synthèse globale G correspondant à une synthèse locale commune à tous les noeuds de calcul opérationnels, par exemple $N_1$, $N_2$, $N_j$, $N_k$ voire $N_N$ de ladite pluralité de noeuds de calcul. Le mécanisme de publication locale selon la présente invention est détaillé par la suite en relation avec la figure 3.

A l'instant $t_{23}$ avec $t_{23}> t_{22}$, et tel que $t_{23}-t_{18}=P$ et $t_{23}<t_{24}=t_{22}+ \Delta$, le noeud de calcul courant $N_1$ met en oeuvre une sixième étape 48 d'émission E-$M_5$, via son module d'émission 16, et émet le message $M_5$ (ou encore $M_{5\_N1}$). A ce stade, la troisième étape 50 de traitement et d'analyse A, débutée à l'instant $t_{22}$ (i.e. $(t_{22}+\Delta)> t_{23}$), est toujours en cours de réalisation, si bien que le message $M_5$ (ou encore $M_{5\_N1}$) transmis par le module d'émission 16 reste identique au message $M_4$ transmis au cycle précédent $C_4$.

A l'instant $t_{24}$ avec $t_{24}> t_{23}$, et tel que $t_{24}-t_{22}= \Delta$, la troisième étape 50 de traitement et d'analyse A des dernières données reçues, à savoir les données $D_5$, est terminée et le module de traitement et d'analyse 24 du noeud de calcul $N_1$ génère le message $M_6$ d'évaluation locale de l'état dudit réseau vue par ledit noeud de calcul courant $N_1$, le message $M_6$ étant associé aux dernières données reçues $D_5$ avant l'instant de début $t_{22}$ de la troisième étape 50 de traitement et d'analyse A, et dont le module de traitement et d'analyse 24 du noeud de calcul $N_1$ a déterminé les éléments $V_{6\_N1}$, $S_{6\_N1}$, et G précités, pendant la durée $\Delta$. En effet, l'instant $t_{24}$ est postérieur à l'instant d'émission périodique $t_{23}$ si bien que le message généré sera émis au cycle suivant $C_6$.

Le cycle $C_5$ de durée P se termine à l'instant $t_{25}$ avec $t_{25}> t_{24}$, tandis que le cycle $C_6$ débute au même instant $t_{25}$.

A l'instant $t_{26}$ avec $t_{26}> t_{25}$, le noeud de calcul courant $N_1$ met en oeuvre une septième étape 46 de réception R-$D_6$, via son module de réception 18, et reçoit un message $M_{6\_Nj}$, avec $j\neq1$ d'évaluation locale de l'état dudit réseau émis par chaque autre noeud de calcul $N_j$ avec $j\neq1$ de ladite pluralité de noeuds de calcul, par exemple par chacun des autres noeuds de calcul $N_2$,$N_{j\neq1\neq k\neq N\neq2}$, $N_{k\neq1\neq j\neq N\neq2}$, mais pas par le noeud $N_{N\neq1\neq j\neq k\neq2}$, qui comme on l'a vu à l'instant $t_{17}$, est soit en panne ou déconnecté de $N_1$, la liaison 14 le connectant au noeud $N_1$ étant interrompue.

A l'instant $t_{27}$ avec $t_{27}> t_{26}$, et tel que $t_{27}-t_{23}=P$, le noeud de calcul courant $N_1$ met en oeuvre une septième étape 48 d'émission E-$M_6$, via son module d'émission 16, et émet le message $M_6$ (ou encore $M_{6\_N1}$) établi au cours du cycle $C_5$ à l'issue de la troisième étape 50 de traitement et d'analyse A, débutée à l'instant $t_{22}$, et ainsi de suite au cycles suivants.

Ainsi, tel qu'illustré selon le mode de réalisation illustré par la figure 2, selon le procédé de la présente invention, les étapes de réception 46 sont mises en oeuvre à chaque cycle de fonctionnement du noeud de calcul considéré mais ne sont pas nécessairement périodiques. Les étapes d'émission 48 sont mises en oeuvre à chaque cycle de fonctionnement du noeud de calcul considéré et sont périodiques de période P. Les étapes de traitement et d'analyse 50 sont mises en oeuvre un cycle de fonctionnement sur deux et sont périodiques de période 2*P (i.e. de période double par rapport à la périodicité des étapes d'émission de période P).

La figure 3 est un organigramme explicatif du mécanisme de publication locale mis en oeuvre par chaque noeud de calcul selon la présente invention.

Les étapes d'émission 48 précédemment décrites visaient à transmettre la vision locale du noeud de calcul considéré, par exemple ici le noeud de calcul $N_1$, à des destinations des fonctions (i.e. applications fonctionnelles/opérationnelles) mises en oeuvre par des noeuds de calculs distincts, alors que l'étape de publication objet de la figure 3 est à destination d'une fonction locale (i.e. application fonctionnelle/opérationnelle) du noeud local considéré, par exemple ici le noeud de calcul $N_1$, une telle fonction locale ayant besoin de connaître la configuration du réseau 10.

Selon la présente invention, un noeud de calcul, par exemple le noeud de calcul $N_1$, met en oeuvre une publication locale de la synthèse globale G, correspondant à une synthèse locale commune à tous les noeuds de calcul opérationnels de ladite pluralité de noeuds de calcul, dans deux cas.

Selon un premier aspect du mécanisme de publication locale, selon la présente invention, illustré par la figure 3, après une étape de traitement 50 précédemment décrite en relation avec la figure 2, le mécanisme de publication met en oeuvre un premier test 52 de comparaison de la vision locale $V_{i\_N1}$ à la synthèse locale $S_{i\_N1}$.

En cas d'inégalité 54, le premier test 52 est réitéré en continu.

En cas d'égalité 56 entre la vision locale $V_{i\_N1}$ et la synthèse locale $S_{i\_N1}$, le mécanisme de publication met en oeuvre un deuxième test 58 de comparaison de toutes les synthèses locales à disposition à l'instant de mise en oeuvre.

Par exemple, si l'instant de mise en oeuvre du deuxième test 58 est tel que : $t_{24}<t_{Test\ 2}<t_{25}$ alors à $t_{Test\ 2}$, le noeud de calcul $N_1$ dispose de $S_{6\_N1}$ et de $S_{5\_N2}$, de $S_{5\_Nj}$ et de $S_{5\_Nk}$. En cas d'inégalité 60, le premier test 52 est réitéré en continu.

En revanche, en cas d'égalité 62, si $S_{6\_N1} = S_{5\_N2} = S_{5\_Nj} = S_{5\_Nk}$ tel que par exemple $S_{6\_N1} = S_{5\_N2} = S_{5\_Nj} = S_{5\_Nk} = [N_1, N_2, N_j, N_k]$ alors selon l'étape 64, le noeud de calcul $N_1$ publie Pub G-$N_1$ la synthèse globale G à l'instant $t_B$ telle que :

$$G = S_{6\_N1} = S_{5\_N2} = S_{5\_Nj} = S_{5\_Nk} = [N_1, N_2, N_j, N_k] = V_{6\_N1}.$$

En variantes non représentées, le premier test 52 et le deuxième test 58 sont mis en oeuvre en parallèles l'un de l'autre, ou inversement le test 52 de comparaison de la vision locale $V_{i\_N1}$ à la synthèse locale $S_{i\_N1}$ est mis en oeuvre après le test 58 de comparaison de toutes les synthèses locales à disposition à l'instant de mise en oeuvre.

Selon un deuxième aspect du mécanisme de publication locale, selon la présente invention, illustré par la figure 3, mis en oeuvre en parallèle du premier aspect du mécanisme de publication précédemment décrit, le noeud de calcul courant $N_1$ met en oeuvre en parallèle des étapes 52, 58, précédemment décrites, une étape 66 au cours de laquelle le noeud de calcul $N_1$ surveille en continu les publications locales au sein des autres noeuds de calculs.

Lorsque le noeud de calcul $N_1$ détecte 66 qu'une synthèse globale G a été publiée Pub $G$-$N_{k\neq1}$ par un autre noeud de calcul, par exemple le noeud de calcul $N_k$, distinct du noeud de calcul courant $N_1$, à un instant $t_A$, tel que $t_A < t_B$, autrement dit avant détermination par le noeud de calcul courant $N_1$ et publication locale 64 par le noeud de calcul courant $N_1$, selon une étape 68, le noeud de calcul courant $N_1$ publie Pub $G$-$N_1$=$G$-$N_k$ alors à son tour la synthèse globale G commune à tous les noeuds de calculs opérationnels telle que publiée auparavant par le noeud de calcul $N_k$.

Selon un aspect particulier de l'invention, la détection 66, est par exemple mise en oeuvre par comparaison de la dernière synthèse locale publiée, indiquée par chaque autre noeud de calcul au sein de chaque message reçu à un cycle courant, respectivement à la dernière synthèse locale publiée, indiquée par chaque autre noeud de calcul au sein de chaque message reçu, à un cycle précédent.

Les étapes du procédé selon la présente invention précédemment décrites en relation avec les figures 2 et 3, ont permis de déterminer une liste de noeuds de calcul en bon fonctionnement, c'est-à-dire capable de dialoguer entre eux.

Un tel résultat permet d'optimiser par ailleurs le synchronisme de l'heure inter-noeuds de calcul.

En effet, selon un aspect complémentaire, selon la présente invention chaque noeud de calcul est associé à un indice prédéterminé, et au sein de la synthèse globale G, le noeud de calcul de valeur d'indice la plus faible prend le rôle de maître d'une heure commune à tous les noeuds de calcul identifiés au sein de ladite synthèse globale G, et chaque autre noeud de calcul opérationnel identifié au sein de ladite synthèse globale G est un noeud de calcul esclave propre à assurer le recalage de son heure locale sur celle du noeud de calcul maître.

Un noeud de calcul esclave assure le recalage de son heure locale sur celle du noeud de calcul maître en adaptant, selon une fonction affine, la vitesse de progression de son heure locale pour se rapprocher sans discontinuité de la vitesse de progression de l'heure du noeud de calcul maître, la fonction affine dépendant d'un seuil de déclenchement prédéterminé commun à chaque noeud de calcul de ladite pluralité de noeuds de calcul, et d'un temps de convergence prédéterminé propre à chaque noeud de calcul. Autrement dit, selon la présente invention, pour éviter tout saut « d'heure système », en dehors de l'établissement de la configuration, seule la pente de correction, entre heure locale et heure diffusée par le noeud de calcul maître, est recalée, ce qui permet d'obtenir une progression continue et monotone de cette heure locale sans produire de discontinuité.

Comme indiqué précédemment, en variante complémentaire, le message d'évaluation locale de l'état du réseau comprend, en plus du triplet précité d'informations portant sur l'état de fonctionnement en tant que tel de chaque noeud de calcul, explicitement un identifiant du noeud de calcul émetteur d'un tel message, un tel identifiant correspondant, par exemple, à un indice /prédéterminé, et également son état de synchronisation en terme de référence horaire commune, sa vision courante de l'état de synchronisation en terme de référence horaire commune des autres noeuds opérationnels du système, sa vision consolidée par les autres noeuds opérationnels du système de l'état de synchronisation en terme de référence horaire commune des autres noeuds opérationnels du système, le dernier état de synchronisation globale en terme de référence horaire commune associé à l'ensemble de noeuds opérationnels. Ces éléments permettant d'établir et suivre une référence horaire commune comme décrit par la suite.

Ainsi, selon la présente invention, pendant une première phase de fonctionnement du réseau 10, seuls les noeuds $N_4$, $N_7$, $N_9$ et $N_{10}$ sont par exemple opérationnels. Le noeud $N_4$ est alors le noeud maître tandis que les noeuds $N_7$, $N_9$ et $N_{10}$ sont des noeuds esclaves asservissant leur référence horaire sur celle du noeud de calcul $N_4$. Au cours d'une deuxième phase de fonctionnement du réseau 10, le noeud de calcul $N_1$ démarre. A son démarrage, le noeud de calcul $N_1$ récupère l'heure du noeud maître $N_4$, et dès que l'ensemble des noeuds opérationnels ont convergé selon la présente invention vers une synthèse globale G commune de l'état de fonctionnement du réseau, chaque noeud de calcul comprend directement que le noeud de calcul $N_1$ devient le maître de l'heure commune à tous les noeuds opérationnels indiqués au sein de la synthèse globale G et que par conséquent le noeud $N_4$ passe du rôle de maître à esclave.

Il en est de même en cas de de panne d'un noeud maître courant, une telle panne étant retranscrite par l'absence du noeud maître courant en panne dans la synthèse globale G publiée après la panne, si bien que le noeud d'indice le plus faible au sein de la synthèse globale G devient alors le nouveau noeud de calcul maitre.

Chaque noeud de calcul esclave entretient donc une « heure système » réputée synchrone sur tous les noeuds de calcul qui est une fonction affine de l'heure locale. Autrement dit, un temps continu monotone est ainsi partagé par l'ensemble des fonctions mises en oeuvre par les noeuds de calculs opérationnels qui se relaient le rôle de maître efficacement en partageant et en consolidant une même synthèse globale G.

Les noeuds de calcul, le procédé et le réseau conçus selon la présente invention offrent donc à chaque noeud de calcul la capacité de fonctionner de manière collaborative, et ce sans aucun maître prédéfini, et la capacité à signaler de manière « synchrone » à toutes les fonctions mises en oeuvre par chaque noeud de calcul les changements de présence de chaque autre fonction mise en oeuvre au sein du réseau, notamment en cas de panne du réseau en termes de liaison, ou de panne d'un noeud de calcul (i.e. d'une ressource de calcul) aboutissant à une diminution des fonctions de calcul actives, ou au contraire en cas de démarrage d'un noeud de calcul supplémentaire de sorte à augmenter les fonctions de calcul actives.

Par « synchrone » on entend que le procédé permet à chaque noeud de calcul opérationnel (i.e. en bon état de fonctionnement) de remonter « simultanément » un changement d'état de fonctionnement, voire un état de synchronisation, du réseau, c'est-à-dire avec un retard maximal prédéterminé entre la première remontée mise en oeuvre par cycle par un premier noeud de calcul et la dernière remontée mise en oeuvre par un autre noeud de calcul au cours du même cycle. Ainsi, les mécanisme/échanges, qui permettent aux fonctions (i.e. applications fonctionnelles/opérationnelles) de resynchroniser à un contexte fonctionnel cohérent, ne risque pas d'échouer car à chaque instant chaque noeud de calcul connaît la capacité fonctionnelle accessible.

Ainsi, selon la présente invention, une surveillance globale et collaborative du réseau opérationnel est obtenue à tout instant, l'état du réseau (en termes d'état de fonctionnement et en complément en termes de synchronisation de chaque noeud de calcul) mis à jour régulièrement et de façon « simultanée » (c'est-à-dire avec un retard maximal prédéterminé entre la première remontée mise en oeuvre par cycle par un premier noeud de calcul et la dernière remontée mise en oeuvre par un autre noeud de calcul au cours du même cycle), permet de remonter une liste de noeuds de calcul ainsi qu'un résultat de santé du réseau.

Le procédé selon la présente invention permet l'établissement d'une vision cohérente commune à un ensemble de noeud de calcul en traitant les démarrages / redémarrages des noeuds de calcul dans n'importe quel ordre, en traitant les pannes franches de n'importe quel noeud de calcul, en garantissant un temps maximal (en nombre de cycles) d'établissement de (i.e. de convergence vers) la nouvelle vision commune des noeuds présents, et une publication « simultanée » (i.e. par exemple au maximum en une période entre le premier noeud de calcul, effectuant sa publication locale et le dernier noeud de calcul effectuant sa publication locale) de la nouvelle vision commune des noeuds présents.

Par ailleurs, associé à cette notion de contexte fonctionnel cohérent obtenu selon la présente invention, un mécanisme permettant de partager, sans saut temporel, une référence horaire sur tous les noeuds de calculs opérationnels, et ce quelle que soit la configuration de fonction encore présente et opérationnelle au sein du système critique associé au réseau selon la présente invention, est mis en oeuvre.

L'existence d'une heure commune entre tous les noeuds de calcul ainsi que l'établissement d'un état du réseau « instantané » (en termes d'état de fonctionnement et en complément en termes d'état de synchronisation de chaque noeud de calcul) commun à tous les noeuds de calcul et donc à toutes les fonctions qu'ils hébergent, permettent d'une part d'Optimiser les latences maximales des chaines fonctionnelles traversant plusieurs fonctions réparties sur plusieurs noeuds de calcul, ce qui évite d'intégrer des temps complémentaires dus aux gigues (de l'anglais *jitter*) temporels. D'autre part, la présente invention, permet de simplifier la gestion des états (en termes d'état de fonctionnement et en complément en termes d'état de synchronisation de chaque noeud de calcul) et mode des fonctions en limitant le nombre de transitoires (les changement d'état (en termes d'état de fonctionnement et en complément en termes d'état de synchronisation de chaque noeud de calcul) étant connus « simultanément » (c'est-à-dire avec un retard maximal prédéterminé entre la première remontée mise en oeuvre par cycle par un premier noeud de calcul et la dernière remontée mise en oeuvre par un autre noeud de calcul au cours du même cycle) sur tous les noeuds de calcul.

Ainsi la présente invention est une brique essentielle de la reproductibilité et de la maitrise des systèmes électroniques à logiciel prépondérant répartis sur plusieurs noeuds de calcul réclamant des coopérations temporellement maitrisées optimisées. En effet, la présente invention propose une prise de décision « conjointe » entre plusieurs noeuds de calcul pour définir conjointement l'ensemble des noeuds de calcul en bon fonctionnement, l'ensemble des noeuds de calcul synchronisés en termes de référence horaire commune et élire le noeud de calcul maitre du mécanisme de synchronisation de l'heure commune. Autrement dit, la consolidation, dans le temps, des informations connues des différents noeuds de calcul, dans tous les noeuds de calcul, permet d'élaborer une décision « commune » à un instant dont on maitrise l'écart maximal par rapport au temps réel, ce qui permet d'assurer que tous les noeuds de calcul en bon fonctionnement sachent qu'ils contribuent, ensemble, au même système électronique, notamment critique, avec un écart temporel maximal de deux fois la période P d'échange du message d'évaluation locale de l'état du réseau (en termes d'état de fonctionnement et en complément en termes d'état de synchronisation de chaque noeud de calcul).

**Revendications**

1. Procédé (40) de communication de l'état d'un réseau (10) de calculateur(s) comprenant une pluralité de noeuds de calcul ($N_1$, $N_2$, ..., $N_N$) interconnectés au sein dudit réseau (10), le procédé étant propre à être mis en oeuvre, cycliquement, par chaque noeud de calcul ($N_1$, $N_2$, ..., $N_N$),

le procédé comprenant au moins :

- une étape d'émission (48), par un noeud de calcul courant ($N_1$) opérationnel de ladite pluralité de noeuds de calcul, à chaque cycle courant ($C_i$) après une phase de démarrage/redémarrage dudit noeud de calcul courant, vers tous les autres noeuds de calcul ($N_2$, ..., $N_N$) de ladite pluralité de noeuds de calcul, d'un message ($M_i$) d'évaluation locale de l'état dudit réseau (10), ledit message ($M_i$) comprenant au moins :

- une vision locale ($V_{i\_N1}$) de l'état de fonctionnement dudit réseau (10) vue par ledit noeud de calcul courant ($N_1$), ladite vision locale correspondant à la liste des autres noeuds de calcul de ladite pluralité de noeuds de calcul, dont le noeud de calcul courant ($N_1$) a reçu un message d'évaluation associé à un cycle précédent le cycle courant,
- une synthèse locale ($S_{i\_N1}$) de l'état de fonctionnement dudit réseau vue par ledit noeud de calcul courant, ladite synthèse locale ($S_{i\_N1}$) correspondant à l'intersection de la vision locale ($V_{Ci\_N1}$) dudit noeud de calcul courant et des visions locales émises, au cours d'un cycle précédent, à destination dudit noeud de calcul courant, par les autres noeuds de calcul de ladite pluralité de noeuds de calcul,
- une dernière synthèse globale (G) de l'état de fonctionnement dudit réseau publiée localement par ledit noeud de calcul courant, ladite synthèse globale (G) correspondant à une synthèse locale commune à tous les noeuds de calcul opérationnels de ladite pluralité de noeuds de calcul,

- une étape de réception (46), par ledit noeud de calcul courant ($N_1$), à chaque cycle courant ($C_i$), d'un message d'évaluation locale de l'état dudit réseau émis par chaque autre noeud de calcul de ladite pluralité de noeuds de calcul, chaque message ($M_{i\_Nk}$) d'évaluation reçu en provenance d'un autre noeud de calcul ($N_k$) distinct dudit noeud de calcul courant ($N_1$) comprenant réciproquement au moins :

- une vision locale ($V_{i\_Nk}$) de l'état de fonctionnement dudit réseau vue par ledit autre noeud de calcul ($N_k$) distinct dudit noeud de calcul courant ($N_1$),
- une synthèse locale ($S_{i\_Nk}$) de l'état de fonctionnement dudit réseau vue par ledit autre noeud de calcul ($N_k$) distinct dudit noeud de calcul courant ($N_1$),
- une dernière synthèse globale (G) de l'état de fonctionnement dudit réseau publiée localement par ledit autre noeud de calcul ($N_k$) distinct dudit noeud de calcul courant (N1);

- une étape (50) de traitement et d'analyse des dernières données reçues, ladite étape de traitement, étant mise en oeuvre un cycle sur deux, et générant à chaque mise en oeuvre un message d'évaluation locale de l'état dudit réseau vu par ledit noeud de calcul courant ($N_1$), associé auxdites dernières données reçues,

le message ($M_i$) émis à chaque cycle d'émission correspondant au dernier message généré au cours de ladite étape de traitement.

**2.** Procédé (40), selon l'une quelconque des revendications précédentes, comprenant en outre une étape de publication locale (64), par ledit noeud de calcul courant ($N_1$), de la synthèse globale (G) associée aux données reçues lors de l'étape de réception du cycle courant, en présence, d'une égalité entre la vision locale et la synthèse locale, et d'une égalité entre toutes les synthèses locales, comprenant la synthèse locale vue par ledit noeud de calcul courant et les synthèses locales reçues des autres noeuds de calcul ($N_2$, ..., $N_N$), la synthèse globale (G) correspondant alors à la synthèse locale.

**3.** Procédé (40), selon l'une quelconque des revendications précédentes, comprenant en outre une étape de publication locale (68), par ledit noeud de calcul courant ($N_1$), de la synthèse globale (G) associée aux données reçues lors de l'étape de réception du cycle courant, lorsque ladite synthèse globale (G) a été publiée par un autre noeud de calcul ($N_k$) de ladite pluralité et distinct dudit noeud de calcul courant ($N_1$), avant détermination, par ledit noeud de calcul courant ($N_1$), d'une égalité entre la vision locale et la synthèse locale, et d'une égalité entre toutes les synthèses locales, comprenant la synthèse locale vue par ledit noeud de calcul courant et les synthèses locales reçues des autres noeuds de calcul ($N_2$, ..., $N_N$).

**4.** Procédé (40) selon l'une quelconque des revendications précédentes, dans lequel, en cas d'écart(s) entre la synthèse locale ($S_{i\_N1}$) de l'état de fonctionnement dudit réseau vue par ledit noeud de calcul courant ($N_1$) et au moins une des synthèses locales reçues des autres noeuds de calcul ($N_2$, ..., $N_N$), le procédé comprend une étape de signalement d'une instabilité de la vision des noeuds de calcul opérationnels dudit réseau.

**5.** Procédé (40) selon l'une quelconque des revendications précédentes, dans lequel la phase de démarrage/redémarrage de chaque noeud de calcul comprend une étape préalable d'initialisation (42) dudit procédé par lecture (44) d'une configuration statique prédéterminée contenant une liste d'initialisation identifiant chaque noeud de calcul présent théoriquement au sein de ladite pluralité de noeuds de calcul, et leur mode de communication respectif.

**6.** Procédé (40) selon l'une quelconque des revendications précédentes, dans lequel chaque noeud de calcul est associé à un indice prédéterminé, et dans lequel, au sein de la synthèse globale (G), le noeud de calcul de valeur d'indice la plus faible prend le rôle de maître d'une heure commune à tous les noeuds de calcul identifiés au sein de ladite synthèse globale (G), et chaque autre noeud de calcul opérationnel identifié au sein de ladite synthèse globale (G) est un noeud de calcul esclave propre à assurer le recalage de son heure locale sur celle du noeud de calcul maître.

**7.** Procédé (40) selon la revendication 6, dans lequel un noeud de calcul esclave assure le recalage de son heure locale sur celle du noeud de calcul maître en adaptant, selon une fonction affine, la vitesse de progression de son heure locale pour se rapprocher sans discontinuité de la vitesse de progression de l'heure du noeud de calcul maître, la fonction affine dépendant d'un seuil de déclenchement prédéterminé commun à chaque noeud de calcul de ladite pluralité de noeuds de calcul, et d'un temps de convergence prédéterminé propre à chaque noeud de calcul.

**8.** Programme d'ordinateur comportant des instructions logicielles qui, lorsqu'elles sont exécutées par un ordinateur, mettent en oeuvre un procédé selon l'une quelconque des revendications précédentes.

**9.** Noeud de calcul ($N_1$) d'un réseau de calculateur(s) comprenant une pluralité de noeuds de calcul ($N_1$, $N_2$, ..., $N_N$) interconnectés au sein dudit réseau, **caractérisé en ce que** ledit noeud de calcul comprend :

- un module (16) d'émission, configuré pour émettre à chaque cycle courant ($C_i$) après une phase de démarrage/redémarrage dudit noeud de calcul, vers tous les autres noeuds de calcul ($N_2$, ..., $N_N$) de ladite pluralité de noeuds de calcul, un message ($M_i$) d'évaluation locale de l'état dudit réseau (10), ledit message ($M_i$) comprenant au moins :

  - une vision locale ($V_{i\_N1}$) de l'état de fonctionnement dudit réseau (10) vue par ledit noeud de calcul ($N_1$), ladite vision locale correspondant à la liste des autres noeuds de calcul de ladite pluralité de noeuds de calcul, dont ledit noeud de calcul ($N_1$) a reçu un message d'évaluation associé à un cycle précédent le cycle courant,
  - une synthèse locale ($S_{i\_N1}$) de l'état de fonctionnement dudit réseau vue par ledit noeud de calcul courant, ladite synthèse locale ($S_{i\_N1}$) correspondant à l'intersection de la vision locale ($V_{i\_N1}$) dudit noeud de calcul courant et des visions locales émises au cours d'un cycle précédent à destination dudit noeud de calcul par les autres noeuds de calcul de ladite pluralité de noeuds de calcul,
  - une dernière synthèse globale (G) de l'état de fonctionnement dudit réseau publiée localement par ledit noeud de calcul, ladite synthèse globale (G) correspondant à une synthèse locale commune à tous les noeuds de calcul opérationnels de ladite pluralité de noeuds de calcul,

- un module (18) de réception, configuré pour recevoir à chaque cycle courant ($C_i$), un message d'évaluation locale de l'état dudit réseau émis par chaque autre noeud de calcul de ladite pluralité de noeuds de calcul, chaque message ($M_{i\_Nk}$) d'évaluation reçu en provenance d'un autre noeud de calcul ($N_k$) distinct dudit noeud de calcul courant ($N_1$) comprenant réciproquement au moins :

  - une vision locale ($V_{i\_Nk}$) de l'état de fonctionnement dudit réseau vue par ledit autre noeud de calcul ($N_k$) distinct dudit noeud de calcul courant ($N_1$),
  - une synthèse locale ($S_{i\_Nk}$) de l'état de fonctionnement dudit réseau vue par ledit autre noeud de calcul ($N_k$) distinct dudit noeud de calcul courant ($N_1$),
  - une dernière synthèse globale (G) de l'état de fonctionnement dudit réseau publiée localement par ledit autre noeud de calcul ($N_k$) distinct dudit noeud de calcul courant (N1);

- un module (24) de traitement et d'analyse configuré pour traiter et analyser des dernières données reçues, au cours d'un cycle sur deux, et générer à chaque mise en oeuvre un message d'évaluation locale de l'état dudit réseau vu par ledit noeud de calcul courant ($N_1$), associé auxdites dernières données reçues,

le message ($M_i$) émis à chaque cycle d'émission correspondant au dernier message généré par ledit module de traitement.

**10.** Réseau de calculateur(s) comprenant une pluralité de noeuds de calcul interconnectés au sein dudit réseau, **caractérisé en ce que** chacun desdits noeuds de calcul de ladite pluralité est un noeud de calcul selon la revendication 9.

**11.** Réseau de calculateur(s) selon la revendication 10 dans lequel le réseau de calculateurs est un réseau de calculateurs avioniques.

**Patentansprüche**

**1.** Verfahren (40) zum Kommunizieren des Status eines Netzes (10) von Rechner(n), umfassend eine Vielzahl von Rechenknoten ($N_1$, $N_2$, ..., $N_N$), die innerhalb des Netzes (10) miteinander verbunden sind, wobei das Verfahren geeignet ist, um zyklisch von jedem Rechenknoten ($N_1$, $N_2$, ..., $N_N$), implementiert zu werden, das Verfahren mindestens umfassend:

- einen Schritt eines Emittierens (48), durch einen funktionsfähigen aktuellen Rechenknoten ($N_1$) der Vielzahl von Rechenknoten in jedem aktuellen Zyklus ($C_i$) nach einer Start-/Neustartphase des aktuellen Rechenknotens an alle anderen Rechenknoten ($N_2$, ..., $N_N$) der Vielzahl von Rechenknoten, einer Nachricht ($M_i$) zur lokalen Bewertung des Zustands des Netzwerks (10), die Nachricht ($M_i$) mindestens umfassend:

- eine lokale Sicht ($V_{i\_N1}$) des Betriebszustands des Netzes (10) aus Sicht des aktuellen Rechenknotens ($N_1$), wobei die lokale Sicht der Liste der anderen Rechenknoten aus der Vielzahl von Rechenknoten entspricht, wovon der aktuelle Rechenknoten ($N_1$) eine Bewertungsnachricht empfangen hat, die mit einem Zyklus vor dem aktuellen Zyklus assoziiert ist,
- eine lokale Synthese ($S_{i\_N1}$) des Betriebszustands des Netzes aus Sicht des aktuellen Rechenknotens, wobei die lokale Synthese ($S_{i\_N1}$) dem Schnittpunkt der lokalen Sicht ($V_{Ci\_N1}$) des aktuellen Rechenknotens und der lokalen Sichten entspricht, die während eines vorherigen Zyklus von den anderen Rechenknoten der Vielzahl von Rechenknoten an den aktuellen Rechenknoten emittiert wurden,
- eine letzte globale Synthese (G) des Betriebszustands des Netzes, die lokal von dem aktuellen Rechenknoten veröffentlicht wird, wobei die globale Synthese (G) einer lokalen Synthese entspricht, die allen funktionsfähigen Rechenknoten der Vielzahl von Rechenknoten gemeinsam ist,

- einen Schritt eines Empfangens (46), durch den aktuellen Rechenknoten ($N_1$), in jedem aktuellen Zyklus ($C_i$), einer lokalen Bewertungsnachricht des Zustands des Netzes, die von jedem anderen Rechenknoten der Vielzahl von Rechenknoten emittiert wird, wobei jede Bewertungsnachricht ($M_{i\_Nk}$), die von einem anderen Rechenknoten ($N_k$), der von dem aktuellen Rechenknoten ($N_1$) verschieden ist, empfangen wird, wechselseitig mindestens Folgendes umfasst:

- eine lokale Sicht ($V_{i\_Nk}$) des Betriebszustands des Netzes, gesehen von dem anderen Rechenknoten ($N_k$), der sich von dem aktuellen Rechenknoten ($N_1$) unterscheidet,
- eine lokale Synthese ($S_{i\_Nk}$) des Betriebszustands des Netzes, die von dem anderen Rechenknoten ($N_k$) gesehen wird, der sich von dem aktuellen Rechenknoten ($N_1$) unterscheidet,
- eine letzte globale Synthese (G) des Betriebszustands des Netzes, die lokal von dem anderen Rechenknoten ($N_k$), der sich von dem aktuellen Rechenknoten ($N_1$) unterscheidet, veröffentlicht wird;

- einen Schritt (50) zur Verarbeitung und Analyse der zuletzt empfangenen Daten, wobei der Verarbeitungsschritt in jedem zweiten Zyklus durchgeführt wird und bei jeder Durchführung eine Nachricht zur lokalen Bewertung des Zustands des Netzes, gesehen durch den aktuellen Rechenknoten ($N_1$), erzeugt, die mit den zuletzt empfangenen Daten assoziiert ist,

die Nachricht ($M_i$), die bei jedem Emissionszyklus emittiert wird, der letzten Nachricht entspricht, die während des Verarbeitungsschritts erzeugt wurde.

**2.** Verfahren (40) nach einem der vorherigen Ansprüche, ferner umfassend einen Schritt einer lokalen Veröffentlichung (64) der globalen Synthese (G), die mit den im Empfangsschritt des aktuellen Zyklus empfangenen Daten assoziiert ist, durch den aktuellen Rechenknoten ($N_1$), wenn eine Gleichheit zwischen der lokalen Sicht und der lokalen Synthese und eine Gleichheit zwischen allen lokalen Synthesen vorliegt, umfassend die von dem aktuellen Rechenknoten gesehene lokale Synthese und die von den anderen Rechenknoten ($N_2$, ..., $N_N$), wobei die globale Synthese (G) dann der lokalen Synthese entspricht.

3. Verfahren (40), nach einem der vorherigen Ansprüche, ferner umfassend einen Schritt einer lokalen Veröffentlichung (68), durch den aktuellen Rechenknoten ($N_1$), der globalen Synthese (G), die mit den Daten assoziiert ist, die in dem Schritt eines Empfangens des aktuellen Zyklus empfangen wurden, wenn die globale Synthese (G) durch einen anderen Rechenknoten ($N_k$) der Vielzahl und getrennt von dem aktuellen Rechenknoten ($N_1$) veröffentlicht wurde, bevor der aktuelle Rechenknoten ($N_1$) eine Gleichheit zwischen der lokalen Sicht und der lokalen Synthese sowie eine Gleichheit zwischen allen lokalen Synthesen bestimmt, umfassend die von dem aktuellen Rechenknoten gesehene lokale Synthese und die von den anderen Rechenknoten ($N_2$, ..., $N_N$). empfangenen lokalen Synthesen.

4. Verfahren (40) nach einem der vorherigen Ansprüche, wobei im Falle einer Abweichung(en) zwischen der lokalen Synthese ($S_{i\_N1}$) des Betriebszustands des Netzes, die von dem aktuellen Rechenknoten ($N_1$) gesehen wird, und mindestens einer der lokalen Synthesen, die von den anderen Rechenknoten ($N_2$, ..., $N_N$), empfangen werden, das Verfahren einen Schritt umfasst, in dem eine Instabilität der Sicht der funktionsfähigen Rechenknoten des Netzes gemeldet wird.

5. Verfahren (40) nach einem der vorherigen Ansprüche, wobei die Start-/Neustartphase von jedem Rechenknoten einen vorherigen Schritt eines Initialisierens (42) des Verfahrens durch Lesen (44) einer vorbestimmten statischen Konfiguration umfasst, die eine Initialisierungsliste enthält, die jeden Rechenknoten, der theoretisch innerhalb der Vielzahl von Rechenknoten vorhanden ist, und ihren jeweiligen Kommunikationsmodus identifiziert.

6. Verfahren (40) nach einem der vorherigen Ansprüche, wobei jeder Rechenknoten mit einem vorbestimmten Index assoziiert ist, und wobei innerhalb der globalen Synthese (G) der Rechenknoten mit dem niedrigsten Indexwert die Rolle des Masters einer gemeinsamen Zeit für alle innerhalb der globalen Synthese (G) identifizierten Rechenknoten übernimmt, und jeder andere innerhalb der globalen Synthese (G) identifizierte funktionsfähige Rechenknoten ein Slave-Rechenknoten ist, der geeignet ist, um die Neueinstellung seiner lokalen Zeit auf die des Master-Rechenknotens sicherzustellen.

7. Verfahren (40) nach Anspruch 6, wobei ein Slave-Rechenknoten die Neueinstellung seiner lokalen Zeit auf die des Master-Rechenknotens sicherstellt, indem er gemäß einer affinen Funktion die Fortschrittsgeschwindigkeit seiner lokalen Zeit anpasst, um sich ohne Unterbrechung der Fortschrittsgeschwindigkeit der Zeit des Master-Rechenknotens anzunähern, wobei die affine Funktion von einer vorbestimmten Auslöseschwelle, die jedem Rechenknoten der Vielzahl von Rechenknoten gemeinsam ist, und von einer vorbestimmten Konvergenzzeit, die jedem Rechenknoten eigen ist, abhängt.

8. Computerprogramm, umfassend Softwareanweisungen, die, wenn sie von einem Computer ausgeführt werden, ein Verfahren nach einem der vorherigen Ansprüche implementieren.

9. Rechenknoten ($N_1$) eines Rechnernetzes, umfassend eine Vielzahl von Rechenknoten ($N_1$, $N_2$, ..., $N_N$), die innerhalb des Netzes miteinander verbunden sind, **dadurch gekennzeichnet, dass** der Rechenknoten Folgendes umfasst:

- ein Emissionsmodul (16), das konfiguriert ist, um in jedem aktuellen Zyklus ($C_i$) nach einer Start-/Neustartphase des Rechenknotens an alle anderen Rechenknoten ($N_2$, ..., $N_N$) der Vielzahl von Rechenknoten eine Nachricht ($M_i$) zur lokalen Bewertung des Zustands des Netzes (10) zu emittieren, die Nachricht ($M_i$) mindestens Folgendes umfassend:

- eine lokale Sicht ($V_{i\_N1}$) des Betriebszustands des Netzes (10) aus Sicht des Rechenknotens ($N_1$), wobei die lokale Sicht der Liste der anderen Rechenknoten aus der Vielzahl von Rechenknoten entspricht, von denen der Rechenknoten ($N_1$) eine Bewertungsnachricht empfangen hat, die mit einem Zyklus vor dem aktuellen Zyklus assoziiert ist,
- eine lokale Synthese ($S_{i\_N1}$) des Betriebszustands des Netzes aus Sicht des aktuellen Rechenknotens, wobei die lokale Synthese ($S_{i\_N1}$) dem Schnittpunkt der lokalen Sicht ($V_{i\_N1}$) des aktuellen Rechenknotens und der lokalen Sichten entspricht, die während eines vorhergehenden Zyklus von den anderen Rechenknoten der Vielzahl von Rechenknoten an den Rechenknoten emittiert wurden,
- eine letzte globale Synthese (G) des Betriebszustands des Netzes, die lokal von dem Rechenknoten veröffentlicht wird, wobei die globale Synthese (G) einer lokalen Synthese entspricht, die allen funktionsfähigen Rechenknoten der Vielzahl von Rechenknoten gemeinsam ist,

- ein Empfangsmodul (18), das konfiguriert ist, um in jedem aktuellen Zyklus ($C_i$) eine lokale Bewertungnachricht des Zustands des Netzes zu empfangen, die von jedem anderen Rechenknoten der Vielzahl von Rechenknoten emittiert wird, wobei jede Bewertungsnachricht ($M_{i\_Nk}$), die von einem anderen Rechenknoten ($N_k$), der von dem aktuellen Rechenknoten ($N_1$) verschieden ist, empfangen wird, wechselseitig mindestens Folgendes umfasst:

- eine lokale Sicht ($V_{i\_Nk}$) des Betriebszustands des Netzes, gesehen von dem anderen Rechenknoten ($N_k$), der sich von dem aktuellen Rechenknoten ($N_1$) unterscheidet,
- eine lokale Synthese ($S_{i\_Nk}$) des Betriebszustands des Netzes, die von dem anderen Rechenknoten ($N_k$) gesehen wird, der sich von dem aktuellen Rechenknoten ($N_1$) unterscheidet,
- eine letzte globale Synthese (G) des Betriebszustands des Netzes, die lokal von dem anderen Rechenknoten ($N_k$), der sich von dem aktuellen Rechenknoten ($N_1$) unterscheidet, veröffentlicht wird;

- ein Verarbeitungs- und Analysemodul (24), das konfiguriert ist, um die zuletzt empfangenen Daten in jedem zweiten Zyklus zu verarbeiten und zu analysieren und bei jeder Implementierung eine lokale Bewertungsnachricht des Zustands des Netzes, gesehen durch den aktuellen Berechnungsknoten ($N_1$), zu erzeugen, die mit den zuletzt empfangenen Daten assoziiert ist,

wobei die in jedem Emissionszyklus emittierte Nachricht ($M_i$) der letzten Nachricht entspricht, die von dem Verarbeitungsmodul erzeugt wird.

**10.** Netz von Rechner(n), umfassend eine Vielzahl von Rechenknoten, die innerhalb des Netzes miteinander verbunden sind, **dadurch gekennzeichnet, dass** jeder der Vielzahl von Rechenknoten ein Rechenknoten nach Anspruch 9 ist.

**11.** Netz von Rechner(n) nach Anspruch 10, wobei das Netz von Rechner(n) ein Avionik-Rechnernetz ist.

**Claims**

**1.** A method (40) for communicating the state of a network (10) of computer(s) comprising a plurality of interconnected computing nodes ($N_1$, $N_2$, ..., $N_N$) within said network (10), the method being suitable for being implemented, cyclically, by each computing node ($N_1$, $N_2$, ..., $N_N$), the method comprising at least:

- a step (48) of transmission, by a current operational computing node ($N_1$), of said plurality of computing nodes, at each current cycle ($C_i$) after a start/restart phase of said current computing node, to all the other computing nodes ($N_2$, ..., $N_N$) of said plurality of computing nodes, a local evaluation message ($M_i$) of the state of said network (10), said message ($M_i$) comprising at least:

- a local view ($V_{i\_N1}$) of the operating state of said network (10) as seen by said current computing node ($N_1$), said local view corresponding to the list of other computing nodes of said plurality of computing nodes, from which the current computing node ($N_1$) has received an evaluation message associated with a cycle preceding the current cycle,
- a local synthesis ($S_{i\_N1}$) of the operating state of said network as seen by said current computing node, said local synthesis ($S_{i\_N1}$) corresponding to the intersection of the local view ($V_{Ci\_N1}$) of said current computing node and the local views sent, during a previous cycle, to said current computing node by the other computing nodes of said plurality of computing nodes,
- a final global synthesis (G) of the operating state of said network published locally by said current computing node, said global synthesis (G) corresponding to a local synthesis common to all the operational computing nodes of said plurality of computing nodes,

- a step of reception (46), by said current computing node ($N_1$), in each current cycle ($C_i$), of a local evaluation message of the state of said network transmitted by each other computing node of said plurality of computing nodes, each evaluation message ($M_{i\_Nk}$) received from another computing node ($N_k$) distinct from said current computing node ($N_1$) reciprocally comprising at least:

- a local view ($V_{i\_Nk}$) of the operating state of said network as seen by said other computing node ($N_k$)

distinct from said current computing node ($N_1$),
- a local synthesis ($S_{i\_Nk}$) of the operating state of said network as seen by said other computing node ($N_k$) distinct from said current computing node ($N_1$),
- a final global synthesis (G) of the operating state of said network published locally by said other computing node ($N_k$) distinct from said current computing node ($N_1$);

- a step (50) of processing and analysing the last data received, said processing step being implemented every other cycle and generating, each time it is implemented, a local evaluation message of the state of said network as seen by said current computing node ($N_1$), associated with said last data received,

the message ($M_i$) transmitted at each transmission cycle corresponds to the last message generated during said processing step.

2.  The method (40) according to any one of the preceding claims, further comprising a step of local publication (64), by the said current computing node ($N_1$), of the global synthesis (G) associated with the data received during the reception step of the current cycle, in the presence of an equality between the local view and the local synthesis, and an equality between all the local syntheses, comprising the local synthesis seen by said current computing node and the local syntheses received from the other computing nodes ($N_2$, ..., $N_N$), the global synthesis (G) then corresponding to the local synthesis.

3.  The method (40), according to any one of the preceding claims, further comprising a step of local publication (68), by said current computing node ($N_1$), of the global synthesis (G) associated with the data received during the reception step of the current cycle, when said global synthesis (G) has been published by another computing node ($N_k$) of said plurality that is distinct from said current computing node ($N_1$), before determination, by said current computing node ($N_1$), of an equality between the local view and the local synthesis, and of an equality between the local view seen by the current compute code all the local syntheses received from the other computer nodes ($N_2$, ..., $N_N$).

4.  The method (40) according to any one of the preceding claims, in which, in the event of discrepancy(s) between the local synthesis ($S_{i\_N1}$) of the operating state of said network seen by said current computing node ($N_1$) and at least one of the local syntheses received from the other computing nodes ($N_2$, ..., $N_N$), the method comprises a step of signalling instability in the view of the operational computing nodes of said network.

5.  The method (40) according to any one of the preceding claims, in which the start/restart phase of each computing node comprises a prior step of initializing (42) said method by reading (44) a predetermined static configuration containing an initialisation list identifying each computing node theoretically present within said plurality of computing nodes, and their respective communication mode.

6.  The method (40) according to any one of the preceding claims, in which each computing node is associated with a predetermined index, and in which, within the global synthesis (G), the computing node with the lowest index value takes on the role of master of a time common to all the computing nodes identified within said global synthesis (G), and each other operational computing node identified within said global synthesis (G) is a slave computing node capable of recalibrating its local time to that of the master computing node.

7.  The method (40) according to claim 6, in which a slave computing node ensures the recalibration of its local time to that of the master computing node by adapting, according to an affine function, the rate of progression of its local time in order to continuously approach the rate of progression of the time of the master computing node, the affine function depending on a predetermined trigger threshold common to each computing node of said plurality of computing nodes, and a predetermined convergence time specific to each computing node.

8.  A computer program comprising software instructions which, when executed by a computer, implement a method according to any one of the preceding claims.

9.  A computing node ($N_1$) of a network of computer(s) comprising a plurality of computing nodes ($N_1$, $N_2$, ..., $N_N$) interconnected within said network, **characterised in that** said computing node comprises:

- a transmission module (16), configured to transmit in each current cycle ($C_i$) after a start/restart phase of said computing node, to all the other computing nodes ($N_2$, ..., $N_N$) of said plurality of computing nodes, a local

evaluation message ($M_i$) of the state of said network (10), said message ($M_i$) comprising at least:

- a local view ($V_{i\_N1}$) of the operating state of said network (10) as seen by said computing node ($N_1$), said local view corresponding to the list of other computing nodes of said plurality of computing nodes, from which said computing node ($N_1$) has received an evaluation message associated with a cycle preceding the current cycle,
- a local synthesis ($S_{i\_N1}$) of the operating state of said network as seen by said current computing node, said local synthesis ($S_{i\_N1}$) corresponding to the intersection of the local view ($V_{i\_N1}$) of said current computing node and the local views sent, during a previous cycle, to said current computing node by the other computing nodes of said plurality of computing nodes,
- a final global synthesis (G) of the operating state of said network published locally by said computing node, said global synthesis (G) corresponding to a local synthesis common to all the operational computing nodes of said plurality of computing nodes,

a reception module (18), configured to receive in each current cycle ($C_i$), a local evaluation message of the state of said network transmitted by each other computing node of said plurality of computing nodes, each evaluation message ($M_{i\_Nk}$) received from another computing node ($N_k$) distinct from said current computing node ($N_1$) reciprocally comprising at least:

- a local view ($V_{i\_Nk}$) of the operating state of said network as seen by said other computing node ($N_k$) distinct from said current computing node ($N_1$),
- a local synthesis ($S_{i\_Nk}$) of the operating state of said network as seen by said other computing node ($N_k$) distinct from said current computing node ($N_1$),
- a final global synthesis (G) of the operating state of said network published locally by said other computing node ($N_k$) distinct from said current computing node ($N_1$);

- a processing and analysis module (24) configured to process and analyse the last data received, every second cycle, and to generate each time it is implemented, a local evaluation message of the state of said network as seen by said current computing node ($N_1$), associated with said last data received,

the message ($M_i$) transmitted at each transmission cycle corresponding to the last message generated by said processing module.

10. A computer network comprising a plurality of computing nodes interconnected within said network, **characterised in that** each of said plurality of computing nodes is a computing node according to claim 9.

11. The computer network according to claim 10, wherein the computer network is an avionics computer network.

FIG.1

# FIG.2

EP 4 002 801 B1

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 9760529 B1

**Littérature non-brevet citée dans la description**

•   Enabling Fog-based Industrial Robotics Systems. **SHAIK MOHAMMED SALMAN et al.** 2020 25TH IEEE INTERNATIONAL CONFERENCE ON EMERGING TECHNOLOGIES AND FACTORY AUTOMATION (ETFA). IEEE, 08 Septembre 2020, vol. 1, 61-68